(19) Europäisches Patentamt
European Patent Office
Office européen des brevets

(11) **EP 4 357 942 A1**

(12) **EUROPEAN PATENT APPLICATION**
published in accordance with Art. 153(4) EPC

(43) Date of publication:
**24.04.2024 Bulletin 2024/17**

(21) Application number: **22824250.9**

(22) Date of filing: **15.06.2022**

(51) International Patent Classification (IPC):
*G06F 16/9535* (2019.01)    *G06F 16/906* (2019.01)
*G06F 16/25* (2019.01)    *G06Q 50/18* (2012.01)

(52) Cooperative Patent Classification (CPC):
**G06Q 10/06398; G06Q 10/063112; G06Q 50/18;**
**G06N 3/09**

(86) International application number:
**PCT/CN2022/098946**

(87) International publication number:
**WO 2022/262775 (22.12.2022 Gazette 2022/51)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.06.2021 CN 202110680713**
**28.07.2021 CN 202110858078**

(71) Applicant: **Nozo Group Co., Ltd.**
**Shenzhen, Guangdong 518000 (CN)**

(72) Inventor: **MENG, Tianqing**
**Hong Kong Cooperation Zone Shenzhen,**
**Guangdong**
**518000 (CN)**

(74) Representative: **Ipey**
**Apex House**
**Thomas Street**
**Trethomas**
**Caerphilly CF83 8DP (GB)**

(54) **INFORMATION PROCESSING METHOD AND APPARATUS BASED ON DATA EXCHANGE, AND DEVICE AND STORAGE MEDIUM**

(57)    The application provides a method for information processing based on data interaction, applied to an information processing platform, including: obtaining basic information of an attorney, establishing a connection with a third-party database, extracting all patent case data corresponding to the attorney; calculating a historical grant rate of the attorney based on all patent case data and extracting to-be-evaluated patent cases, reviewing the to-be-evaluated patent cases and obtaining a review result; determining a professional level of the attorney according to the historical grant rate of the attorney and the review result; and generating personal introduction information corresponding to the attorney according to a preset template based on the professional level of the attorney. The method realizes a true and accurate evaluation of the attorney. In addition, an apparatus, device and storage medium for information processing based on data interaction are further provided.

FIG. 1

## Description

### 1. Technical Field

The present application relates to information processing technology, and particularly to a method, apparatus, device and storage medium for information processing based on data interaction.

### 2. Description of Related Art

With the vigorous development of science and technology, intellectual property rights are increasingly valued by enterprises. As a kind of intangible asset, patents have become an important competitive resource for enterprises. Patent documents are a kind of professional legal documents, and the patent applicants often need to be realized by entrusting a patent agency because the drafting of the patent documents needs to be performed by the patent attorney in the agency.

However, there is a serious information asymmetry in the patent agency industry at present. Whenever an applicant wants to know the information (e.g., the professional level) of a patent attorney, she/he can only achieve it through the introduction information about the patent attorney that is provided by the agency. However, the method to know the information of the patent attorney is not only inefficient, but also cannot guarantee that the information of the patent attorney provided by the agency is authentic and credible.

### SUMMARY

The purpose of the present application is to provide a method that can accurately obtain the information of patent attorneys so as to solve the problem of the low authenticity of personal introduction information of patent attorneys in this industry.

For solving the above-mentioned problem of the low authenticity, in the first aspect, a method for information processing based on data interaction is provided, the method is applied to an information processing platform and includes:

> obtaining basic information of an attorney, wherein the basic information includes identification information of the attorney;
> establishing a connection with a third-party database, wherein the third-party database stores patent case information, and the patent case information includes the identification information of the attorney;
> processing all patent case data corresponding to the attorney using a established patent case data processing model, and calculating a historical grant rate of the attorney within a preset time;
> extracting a preset number of to-be-evaluated patent cases within a preset period in years from all the patent case data corresponding to the attorney;

> sending the to-be-evaluated patent cases to a corresponding expert for review, and receiving a returned review result;
> determining a professional level of the attorney according to a preset algorithm based on the historical grant rate of the attorney and the review result; and
> generating personal introduction information corresponding to the attorney according to a preset template based on the professional level of the attorney.

For solving the above-mentioned problem of the low authenticity, in the second aspect, an apparatus for information processing based on data interaction is provided, and the apparatus includes:

> an obtaining module used for obtaining basic information of an attorney, wherein the basic information comprises identification information of the attorney;
> a connecting module used for establishing a connection with a third-party database, wherein the third-party database stores patent case information, and the patent case information comprises the identification information of the attorney;
> a processing module used for processing all patent case data corresponding to the attorney using a established patent case data processing model, and calculating a historical grant rate of the attorney within a preset time;
> an extracting module used for extracting a preset number of to-be-evaluated patent cases within a preset period in years from all the patent case data corresponding to the attorney;
> a reviewing module used for sending the to-be-evaluated patent cases to a corresponding expert for review, and receiving a returned review result;
> a determining module used for determining a professional level of the attorney according to a preset algorithm based on the historical grant rate of the attorney and the review result; and
> a generating module used for generating personal introduction information corresponding to the attorney according to a preset template based on the professional level of the attorney.

For solving the above-mentioned problem of the low authenticity, in the third aspect, a computer readable storage medium storing computer program(s) is provided. When the computer program(s) are executed by processor(s), the processor(s) are caused to perform the following steps:

> obtaining basic information of an attorney, wherein the basic information includes identification information of the attorney;
> establishing a connection with a third-party database, wherein the third-party database stores patent case information, and the patent case information includes the identification information of the attorney;

processing all patent case data corresponding to the attorney using a established patent case data processing model, and calculating a historical grant rate of the attorney within a preset time;

extracting a preset number of to-be-evaluated patent cases within a preset period in years from all the patent case data corresponding to the attorney;

sending the to-be-evaluated patent cases to a corresponding expert for review, and receiving a returned review result;

determining a professional level of the attorney according to a preset algorithm based on the historical grant rate of the attorney and the review result; and

generating personal introduction information corresponding to the attorney according to a preset template based on the professional level of the attorney.

For solving the above-mentioned problem of the low authenticity, in the fourth aspect, a computer device including storage(s) and processor(s) is provided. The storage(s) store computer program(s), and when the computer program(s) are executed by the processor(s), the processor(s) are caused to perform the following steps:

obtaining basic information of an attorney, wherein the basic information includes identification information of the attorney;

establishing a connection with a third-party database, wherein the third-party database stores patent case information, and the patent case information includes the identification information of the attorney;

processing all patent case data corresponding to the attorney using a established patent case data processing model, and calculating a historical grant rate of the attorney within a preset time;

extracting a preset number of to-be-evaluated patent cases within a preset period in years from all the patent case data corresponding to the attorney;

sending the to-be-evaluated patent cases to a corresponding expert for review, and receiving a returned review result;

determining a professional level of the attorney according to a preset algorithm based on the historical grant rate of the attorney and the review result; and

generating personal introduction information corresponding to the attorney according to a preset template based on the professional level of the attorney.

The above-mentioned method, apparatus, device and storage medium for information processing based on data interaction first obtain all the patent case data of historical agent of the attorney by interacting with the third-party database according to the basic information of the attorney, then analyze all the patent case data corresponding to the attorney to count the historical grant rate of the attorney, further randomly select the preset number of the to-be-evaluated patent cases within the preset period in years, send the to-be-evaluated patent cases to the experts of the corresponding technology field for review, receive the returned review result, and finally determine a professional level of the attorney according to the historical grant rate corresponding to the attorney, and the review result.

In the method, the authentic patent case data of the historical agent of the attorney can be grabbed based on the interaction with the third-party database, the authentic historical grant rate of the attorney can be obtained based on the authentic patent case data, and the authentic review result can be obtained by extracting the real patent cases for expert review. Finally, the professional level of the attorney is determined by integrating the historical grant rate corresponding to the attorney, and the review result, the determining of professional level is authentic and credible. In addition, the personal introduction information of the attorney is then generated according to the preset template based on the professional level of the attorney, the generated personal introduction information of the attorney is not only authentic and credible, but also comprehensive, which is convenient for the applicant to comprehensively and accurately understand the professional level of the attorney according to the personal introduction information of the attorney. In addition, the personal introduction information of the attorney is open to the outside world and can be obtained quickly on a terminal device by the applicant, furthermore, the applicant can view the personal introduction information of all patent attorneys, rather than the patent attorneys of a certain agency.

BRIEF DESCRIPTION OF THE DRAWINGS

To describe the technical schemes in the embodiments of the present invention or in the prior art more clearly, the following briefly introduces the drawings required for describing the embodiments or the prior art, obviously, the drawings in the following description merely show some embodiments, and for those skilled in the art, other drawings can be obtained according to the drawings without creative efforts.

FIG. 1 is a flow chart of a method for information processing based on data interaction according to an embodiment;

FIG. 2 is a flow chart of a method for determining the professional level of an attorney according to an embodiment;

FIG. 3 is a flow chart of a method for information recommendation based on data interaction according to an embodiment;

FIG. 4 is a flow chart of a method for calculating a degree of matching with each candidate attorney according to an embodiment;

FIG. 5 is a flow chart of an information interaction method according to an embodiment;

FIG. 6 is a timing diagram of the process of information exchange according to an embodiment;
FIG. 7 is a schematic block diagram of the structure of an apparatus for information processing based on data interaction according to an embodiment;
FIG. 8 is a schematic block diagram of the structure of an apparatus for information recommending based on data interaction according to an embodiment;
FIG. 9 is a schematic block diagram of the structure of an information interaction apparatus according to an embodiment;
FIG. 10 is a schematic block diagram of the internal structure of a computer device according to an embodiment.

DETAILED DESCRIPTION

It should be understood that, the embodiments described herein are only for explaining the present application, but not to limit the present application.

The technical solutions in the embodiments of the present application will be clearly and completely described below in conjunction with the drawings in the embodiments of the present application. Apparently, the following embodiments are only part of the embodiments of the present application, not all of the embodiments of the present application. All other embodiments obtained by those skilled in the art without creative efforts are within the scope of the present application.

It should be noted that, the terms "comprising", "including" and "having" in the description and claims of the present application and the above-mentioned drawings as well as any modifications thereof are intended to cover non-exclusive inclusion. For example, a process, method, system, product or apparatus (device) including a series of steps or units is not limited to the listed steps or units, but optionally further includes unlisted steps or units, or includes other steps or units inherent to the processes, method, product or apparatus. For the terms in the claims, description and drawings of the present application, the relational terms such as "first" and "second" are only for distinguishing one entity/operation/object from another entity/operation/object, and are not necessarily requiring or implying any such actual relationship or ordering between these entities/operations/obj ects.

In the present application, "embodiment" means that a particular feature, structure, or characteristic described in connection with the embodiment can be included in at least one embodiment of the present application. The appearance of the term in various places in this specification is not necessarily all referring to the same embodiment, nor is it a separate or alternative embodiment that is mutually exclusive with other embodiments. It is explicitly and implicitly understood by those skilled in the art that the embodiments described herein may be combined with other embodiments.

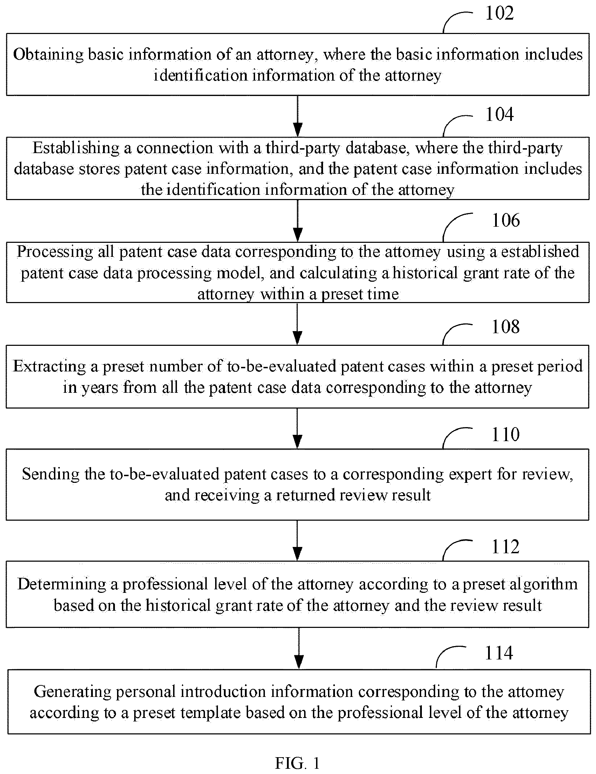

As shown in FIG. 1, to display personal introduction information of patent attorneys in an authentic manner, a method for information processing based on data interaction applied to an information processing platform is provided, and the method includes:

Step 102: obtaining basic information of an attorney, where the basic information includes identification information of the attorney.

In which, the "attorney" here refers to a person engaged in patent agency work that is also known as "patent attorney" or "patent agent". The basic information of the attorney includes the identification information of the attorney that is for determining the identity of the attorney. In one embodiment, the name and surname of the attorney may be directly used as the identification information of the attorney, or the qualification certificate number of the attorney may be used as the identification information of the attorney. In another embodiment, to determine the identification information of the attorney more accurately, the name and surname of the attorney + the practice experience of the attorney may be used as the identification information of the attorney, where the practice experience includes the name of agency corresponding to each practice period of the attorney. In addition, in addition to the identification information of the attorney, the basic information of the attorney may further include other personal information such as gender information, education information, profession information, attorney qualification certificate information, attorney practice certificate information, attorney practice duration in years, and profession agent direction. The practice experience may include when and in which agency the agent practiced practice. For example, for the attorney Li San, there is the practice in agency A during January 2012-July 2018, and the practice in agency B during August 2018-April 2021. At present, the profession agent direction of the attorney in this industry is mainly divided into four kinds, namely software and communication, electronics, machinery, and biology and chemistry.

There are many ways to obtain the basic information of the attorney. In one embodiment, the basic information of the attorney may be obtained directly from registration information of the attorney. The attorney may register with the real name on the information processing platform, where the related personal information needs to be filled out when registering. In another embodiment, the basic information of the attorney may be grabbed by interacting with a third-party platform. For example, the practice experience of the attorney may be searched from the website of the All-China Agents Association, and academic information, profession information and the like of the attorney may be searched from the "Xuexin Network".

Step 104: establishing a connection with a third-party database, where the third-party database stores patent case information, and the patent case information includes the identification information of the attorney.

In which, the third-party database refers to a database that stores the patent case information, which may be the patent search database of the China National Intellectual Property Administration, or other patent search databases such as PatSnap, Baiten, and incoPat. For a case submitted by an agency, its patent case information will include the identification information of the attorney. For example, each patent case information will include a name of an agency and a name and surname of an attorney.

Step 106: processing all patent case data corresponding to the attorney using a established patent case data processing model, and calculating a historical grant rate of the attorney within a preset time.

In which, the patent case data processing model is used for performing batch processing on all the patent case data corresponding to the attorney, the legal status of each patent case can be extracted through the patent case data processing model, and the legal status includes one of for statuses, namely granted, examination in progress, refused, and withdrawn. The status of withdrawn is divided into active withdrawn and deemed withdrawn. The preset time may be customized. For example, the time since the attorney has been in business may be used as the preset time, or the last five years may be used as the preset time.

In one embodiment, the historical grant rate may be obtained by calculating the ratio of the number of granted cases to that of closed cases, where the closed cases may include granted cases, refused cases and withdrawn cases. For example, if the number of granted cases is 120 and that of closed cases is 200, the calculated historical grant rate will be 120/200=60%.

In one embodiment, the calculation of the grant rate may be calculated only based on invention patent cases, because utility model patent cases and design patent cases do not involve substantive examination and their grant rate cannot accurately reflect the professional level of the attorney. Specifically, the patent case data processing model may first extract invention patents by case type, then extract the legal status of each invention patent, and finally count the historical grant rate of the attorney based on the legal status of each invention patent. It will be helpful to accurately evaluate the professional level of the attorney by counting the grant rate based on invention patent cases.

In another embodiment, to better reflect the current professional level of the attorney, a preset number (e.g., 100) of closed cases closest to the current time may be selected, and the historical grant rate that best reflects the current professional level of the attorney may be calculated according to the number of granted cases, the number of refused cases and the number of withdrawn cases in the closed cases.

Step 108: extracting a preset number of to-be-evaluated patent cases within a preset period in years from all the patent case data corresponding to the attorney.

In which, the to-be-evaluated patent cases may be the patent cases that are selected randomly for an expert to evaluate the writing quality of the attorney. Since the professional level of the attorney is generally gradually improved with the accumulation of experience, to truly reflect the current professional level of the attorney, a preset number (e.g., 3) of patent cases may be extracted from the patent case data within the preset period in years (e.g., the past three years) to take as the to-be-evaluated patent cases, so as to facilitate the accurate evaluation of the current professional level of the attorney.

Step 110: sending the to-be-evaluated patent cases to a corresponding expert for review, and receiving a returned review result.

In which, for evaluating the writing quality of the attorney more accurately, it may need to send the to-be-evaluated patent cases to the expert of the corresponding technology field for review, and receive the returned review result which may be a score or a grade. When there are a plurality of to-be-evaluated patent cases, it may need to synthesize the review results corresponding to the to-be-evaluated patent cases. For example, when there are three to-be-evaluated patent cases, the average score of the three pending patent cases may be taken.

In another embodiment, for accurately matching the expert for review, it may need to perform technical analysis on the to-be-evaluated patent cases to determine technology field(s) to which the to-be-evaluated patent cases belongs, and then send the to-be-evaluated patent cases to the expert corresponding to the technology field(s) for review. In which, the division of technology fields may be according to specific technologies, specifically, the technology field may be determined according to the technology classification number, and the technology classification number itself represents the technology to which it belongs. For example, the technology classification number G01 represents the field of measurement and testing, and the technology classification number G02 represents the optics. In another embodiment, the technology field may be determined according to the technology classification number and the technical keywords at the same time, and the combination of the technology classification number + the technical keywords may obtain a more subdivided technology. For example, if the technology classification number indicates program control, and the technical keyword is temperature control, the determined technology will be software-based temperature control.

Step 112: determining a professional level of the attorney according to a preset algorithm based on the historical grant rate of the attorney and the review result.

In which, the historical grant rate of the attorney can accurately reflect the professional level, the review results can accurately reflect the writing quality of the cases, and the professional classification of the attorney can be shown accurately by synthesizing the results of the two. In one embodiment, the two may be synthesized by means of weighted summation.

In one embodiment, the practice duration in years of the attorney and the total number of the historical case filings is obtained to use as inputs of a weight determination model, and the weight determination model is trained based on a deep neural network model. A first weight of the historical grant rate corresponding to the attorney and a second weight of the review result that are outputted by the weight determination model is obtained, and the professional level of the attorney is determined according to the historical grant rate and the first weight as well as the review result and the second weight.

In another embodiment, historical service evaluation information of the attorney may further be obtained.

In which, the historical service evaluation information refers to the evaluation information of the customers of the historical service of the attorney on the profession and service of the attorney. The historical service evaluation information may be a score or a grade. For example, the grade may be divided into very good, good, average, and bad. The historical service evaluation information of the attorney can authentically reflect the service quality of the attorney including service attitude and professional recognition. Then, according to the historical grant rate of the attorney, the review result and the historical evaluation information, the professional level of the attorney may be determined using the preset algorithm. That is, the results of the three are synthesized to perform level division, and the method can more accurately achieve the professional grades of the attorney.

It should be noted that, for the attorney who does not have cases on the information processing platform, there is no historical service evaluation information, that is, the obtained historical service evaluation information may be null. When the historical service evaluation information is null, the historical evaluation information may be set as a default value, or its weight may be set to 0 while the weight of the other two may be increased. In one embodiment, the level division of the professional level may be customized according to actual needs. For example, the professional level may be divided into five levels, namely AAA, AA+, AA, AA-, and A. Or, 6 levels may also be used. In addition, the expression form of the levels may also be customized as, for example, stars for lighting up.

Step 114: generating personal introduction information corresponding to the attorney according to a preset template based on the professional level of the attorney.

In which, the personal introduction information of the attorney includes the professional level of the attorney, so as to more intuitively reflect the professional level of the attorney. In addition, for showing the professional level of the attorney more comprehensively, the generated personal introduction information of the patent attorney not only includes the professional level that reflects the professional level of the attorney, but also includes the main applicant(s) of historical agent and the main technical field(s) of historical agent of the attorney. Furthermore, other information such as the profession agent direction of the attorney may also be included. At present, the profession agent direction of the attorney in this industry is mainly divided into four kinds, namely software and communication, electronics, machinery, and biology and chemistry. The profession agent direction may also be adjusted according to actual needs by, for example, further refining the corresponding agency field.

In one embodiment, the main applicant of the historical agency and the main technical field of the historical agency of the attorney are obtained by following manners of: analyzing all the patent case data corresponding to the attorney, and obtaining applicant(s) of historical agent and technical field(s) of historical agent of the attorney.

In which, when there are many applicants and technical fields in the historical agent, the main applicant(s) and main technical field(s) may be selected therefrom. The main applicants refer to the preset number of applicants selected as the main applicant by sorting the number of cases of each applicant in the historical agent from the most to the least. For example, in the historical agent, if company A has 10 cases, company B has 20 cases, company C has 34 cases, company D has 5 cases and company E has 12 cases, the applicants will be sorted as company C, company B, company E, company A and company D according to the number of patent cases, and then the first three applicants can be selected as the main applicants, namely company C, company B and company E. The main technical fields refer to the technical fields of the preset number (e.g., the first three) selected as the main technical fields by sorting the number of cases of each technical field in the historical agent. By selecting the main applicants and the main technical fields, it will be convenient for the subsequent presentation of the attorney information in a more focused manner.

In one embodiment, the above-mentioned method further includes: sending the generated personal introduction information to a terminal device for display. That is, after logging into the information processing platform, the terminal device can view the personal introduction information of the attorney. It solves the problem in this industry that the personal introduction information of the attorney cannot be obtained accurately and quickly.

The above-mentioned method, apparatus, device and storage medium for information processing based on data interaction first obtain all the patent case data of the historical agent of the attorney by interacting with the third-party database according to the basic information of the attorney, then count the historical grant rate of the attorney by analyzing all the patent case data corresponding to the attorney, and further randomly selects the preset number of the to-be-evaluated patent cases within the preset period in years to send to the experts of the corresponding technology field for evaluation so as to receive the returned review result, and finally, the professional level of the attorney is calculated according to the historical grant rate corresponding to the attorney and the review result.

In this method, the authentic patent case data of the historical agent of the attorney can be grabbed based on the interaction with the third-party database, the authentic historical grant rate of the attorney can be obtained based on the authentic patent case data, and the authentic review result can be obtained by extracting the real patent cases for expert review. Finally, the professional level of the attorney is determined by synthesizing the historical grant rate corresponding to the attorney and the review result, where the determination of the professional level is authentic and credible. In addition, according to the professional level of the attorney, the personal introduction information of the attorney is generated using the preset template, and the generated personal introduction information of the attorney is not only authentic and credible, but also comprehensive, which is convenient for the applicant to comprehensively and accurately understand the professional level of the attorney according to the personal introduction information of the attorney. In addition, the personal introduction information of the attorney is open to the outside world and can be obtained quickly on a terminal device by the applicant. Furthermore, the applicant can view the personal introduction information of all patent attorneys, rather than the patent attorneys of a certain agency.

In one embodiment, the identification information of the attorney includes a name and surname of the attorney and a practice experience of the attorney, and the practice experience includes a name of agency corresponding to a practice period of the attorney; and before processing all the patent case data corresponding to the attorney using the established patent case data processing model, the method further includes: extracting all the patent case data corresponding to the attorney from the third-party database according to the name and surname of the attorney and the practice experience of the attorney.

In which, since it is very likely that there are attorneys have the same name and the same surname, it may be inaccurate to extract the patent case data only based on the name and surname of the attorney. Therefore, in the embodiment, for ensuring the accurate extraction of the patent case data, all the patent case data corresponding to the attorney are extracted from the third-party database according to the name and surname of the attorney and the practice experience of the attorney simultaneously. Specifically, the practice experience of the attorney may include when and in which agency the agent practiced practice. Therefore, it is necessary to define an extraction condition according to the practice experience of the attorney, and extract all the patent case data corresponding to the attorney from the third-party database with "name and surname + time period + agency" as the extraction condition.

In one embodiment, the basic information includes profession agent direction, and extracting the preset number of to-be-evaluated patent cases within the preset period in years from all the patent case data corresponding to the attorney includes: selecting candidate patent case data matching the profession agent direction from all the patent case data corresponding to the attorney; and extracting the to-be-evaluated patent cases within the preset period in years from the candidate patent case data.

In which, the profession agent direction refers to the technology that the attorney is familiar with, which is mainly divided into four kinds, namely software and communication, electronics, machinery, and biology and chemistry. To more accurately reflect the professional level of the attorney in her/his profession agent direction, when extracting the to-be-evaluated patent cases, the patent cases matching her/his profession agent direction will be selected. The candidate patent case data matching the profession agent direction will be selected first, and then several to-be-evaluated patent cases will be randomly selected from the candidate patent cases. By matching with the profession agent direction, the to-be-evaluated patent cases that can better reflect the professional level of the attorney can be selected, which is conducive to subsequent obtaining more accurate review results.

In one embodiment, processing all patent case data corresponding to the attorney using the established patent case data processing model and calculating the historical grant rate of the attorney include: extracting the legal status from all the patent case data using the established preset patent case data processing model, where the legal status includes one of: granted, examination in progress, refused, and withdrawn, and the patent case data processing model is for determining a regular expression corresponding to the legal status and extracting the legal status of each case based on the regular expression; counting a number of granted cases with the legal status of granted, a number of refused cases with the legal status of refused, and a number of withdrawn cases with the legal status of withdrawn; and calculating the historical grant rate according to the number of the granted case, the number of the refused cases, and the number of the withdrawn cases.

In which, the patent case data processing model adopts a regular expression when extracting the legal status of the case. The regular expression is a pattern for describing the match of strings. The corresponding legal status is extracted from each case by determining the regular expression corresponding to the legal status, and the historical grant rate is calculated according to the extracted number of granted cases, number of refused cases, and number of withdrawn cases. The historical grant rate = the number of granted cases / (the number of granted cases + the number of refused cases + the number of withdrawn cases).

In one embodiment, counting the number of the granted cases with the legal status of granted, the number of the refused cases with the legal status of refused, and the number of the withdrawn cases with the legal status of withdrawn includes: counting the number of the granted cases, the number of the refused cases, and the number of the withdrawn cases in a preset number of closed cases closest to a current time; and calculating the historical grant rate according to the number of the granted case, the number of the refused cases, and the number of the withdrawn cases includes: calculating a latest historical grant rate according to the number of the granted cases, the number of the refused cases, and the number of the withdrawn cases in the preset number of closed cases closest to the current time.

In which, the closed cases include granted cases, refused cases, and withdrawn cases. To better reflect the current professional level of the attorney, the grant rate of the preset number (e.g., 100) of the closed cases closest to the current time may be used as the historical grant rate. The historical grant rate is dynamically calculated and is continuously updated over time, so that the professional level of the attorney can be reflected in time.

In one embodiment, counting the number of the granted cases with the legal status of granted, the number of the refused cases with the legal status of refused, and the number of the withdrawn cases with the legal status of withdrawn includes: selecting candidate patent cases with a filing date within a preset time period; and counting the number of the granted cases with the granted status, the number of the refused cases with the refused status, and the number of the withdrawn cases with the withdrawn status in the candidate patent cases; and calculating the historical grant rate according to the number of the granted case, the number of the refused cases, and the number of the withdrawn cases includes: calculating the historical grant rate corresponding to the preset time period according to the number of the granted cases with the granted status, the number of the refused cases with the refused status, and the number of the withdrawn cases with the withdrawn status in the candidate patent cases.

In which, to more accurately reflect the current professional level of the attorney, when calculating the historical grant rate, the grant rate of the cases within the preset time period is counted. The preset time period may refer to the time period with the filing date being a specific year in the time period, because the period of patent examination is relatively long and generally takes more than one year or even three years, the cases with the filing date in the past three years can be selected first, and then the grant state including the number of granted cases, the number of refused cased, and the number of withdrawn cases, of the candidate patent cases with the filing date within the past three years, is counted, so as to reflect the professional level of the attorney in the past three years, and the calculated grant rate will be closer to the current professional level of the attorney.

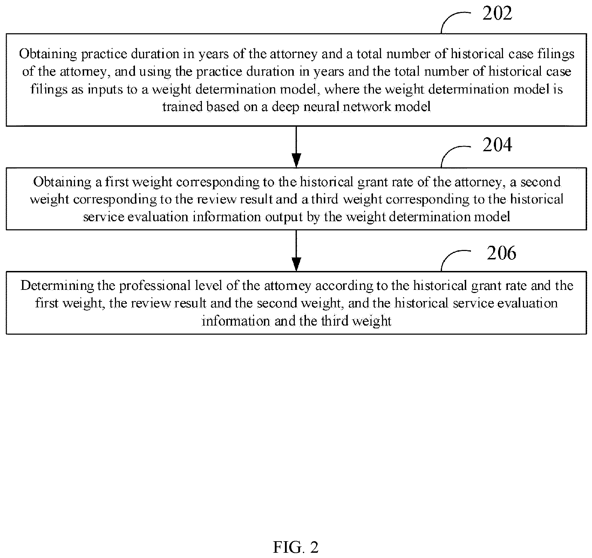

As shown in FIG. 2, in one embodiment, determining the professional level of the attorney according to the preset algorithm based on the historical grant rate of the attorney, the review result, and the historical service evaluation information includes:

Step 202: obtaining practice duration in years of the attorney and a total number of historical case filings of the attorney, and using the practice duration in years and the total number of historical case filings as inputs to a weight determination model, where the weight determination model is trained based on a deep neural network model.

In which, in order to more accurately reflect the real professional level of the attorney, it may need to adjust the weights of the above-mentioned historical grant rate, review result and historical service evaluation information according to the practice duration in years of the attorney and the total number of historical case filings. The adjustment is made according to the weight determination model obtained by training.

The weight determining module is obtained by training and learning based on the deep neural network model. The weight determination model is trained using the supervised training method, and training data needs to be created. The training data is the practice duration in years of the attorney and the total number of historical case filings. Each corresponding manually labeled weight is used as a label for training, and then the parameters in the weight determination model are continuously adjusted using the gradient descent method based on the set loss function until the model reaches the convergence condition.

Step 204: obtaining a first weight corresponding to the historical grant rate of the attorney, a second weight corresponding to the review result and a third weight corresponding to the historical service evaluation information output by the weight determination model.

In which, the first weight, second weight and third weight that are output by the weight determination model are obtained. The first weight reflects the influence of the historical grant rate on the professional level of the attorney, the second weight reflects the influence of the review result on the professional level of the attorney, and the third weight reflects the influence of the historical evaluation information on the professional level of the attorney. Generally speaking, the attorney with a shorter practice duration in years has a relatively larger weight on the review result and a relatively smaller weight on the historical grant rate and historical service evaluation information, because the patent examination cycle is long and the historical grant rate of the attorney with a shorter practice duration in years is relatively less or even have no relevant data yet. Similarly, the corresponding historical service evaluation information will be less, so the reference is not meaningful. As the practice duration in years increase and the total number of cases represented increases, the weights of the historical grant rate and historical service evaluation information will increase correspondingly.

Step 206: determining the professional level of the attorney according to the historical grant rate and the first weight, the review result and the second weight, and the historical service evaluation information and the third weight.

In which, after determining the first weight corresponding to the historical grant rate, the second weight corresponding to the review result, and the third weight corresponding to the historical service evaluation information, the professional level of the attorney may be determined by using the weighted summation. In the specific calculation, the historical grant rate, review results and historical service evaluation information may be converted into scores. After the comprehensive score is calculated, the professional level of the attorney may be determined according to the comprehensive score. For example, there may be divided into five levels. By using the weight determination model to output the weights of the historical grant rate, review result and historical service evaluation information, and calculating the professional level of the attorney through the weighted summation, so that the professional level of the attorney can be more authentically reflected.

In one embodiment, extracting all the patent case data corresponding to the attorney from the third-party database according to the name and surname of the attorney and the practice experience of the attorney includes: determining target search conditions according to the name and surname of the attorney and the practice experience of the attorney, where the target search conditions include the name and surname of the attorney, a name of practicing agency and a corresponding practice period; and extracting all the patent case data corresponding to the attorney from the third-party database according to the target search conditions.

In which, to more accurately grab all the patent case data corresponding to the attorney, accurate target search conditions are required. The target search conditions need to include the name and surname of the attorney + the name of the agency for practicing + the corresponding practice duration. By setting the target search conditions, the interference caused by the same name and surname can be eliminated as much as possible. As a result, it will be more conducive to accurately obtain all the patent case data corresponding to the attorney.

In one embodiment, performing technical analysis on the to-be-evaluated patent cases to determine technology field(s) to which the to-be-evaluated patent cases belongs includes: obtaining the technology classification number and field keywords corresponding to the to-be-evaluated patent cases; and determining the technology field(s) to which the to-be-evaluated patent cases belongs according to the technology classification number and the field keywords.

In which, the field keywords refer to the fields in which the technology is applied, and the technology classification number is for determining the technical category. The specific technology field may be determined according to the technology classification number and the field keywords. For example, if according to the technology classification number, temperature control technology is determined, and the field keywords are "electronic cigarette", it will determine that the to-be-evaluated patent case belongs to the temperature control of electronic cigarette.

In one embodiment, analyzing all the patent case data corresponding to the attorney, and the obtaining applicants of historical agent and the technical fields of historical agent of the attorney include: grabbing classification number information and abstract information of each patent case, analyzing the abstract information, and extracting technical keywords; and using the classification number information and the technical keywords as inputs of a technology field classification model, determining a technology field category corresponding to the patent case, and using the determined technology field category as a technical field label of the patent case.

In which, the classification number information may be detailed to the level of group, for example, G06K9/00. The abstract information refers to the abstract content in a patent document. The abstract information is analyzed to extract the technical keywords, and the extraction of the technical keywords may use a semantic-based method, that is, the technical keywords are extracted by performing semantic analysis on the abstract information. Then, the technology field classification model is used to determine the technology field category of the corresponding patent case, and the technology field category is stored as the technical label of the patent case, which not only facilitates the applicant to view the technical field of the historical agent of the attorney, but is also convenient for the subsequent matching and recommendations in the technology of patent.

In one embodiment, the technology field classification model includes a first feature model, a second feature model, and a classification model. The first feature model is for determining a first feature vector corresponding to the classification number according to the classification number, the second feature model is for determining a second feature vector corresponding to the technical keywords, and the classification model is for determining the technology field category corresponding to the patent case based on the first feature vector and the second feature vector.

In which, the first feature model is for converting the classification number into the first feature vector, the second feature model is for converting the technical keywords into the second feature vector and combining the first feature vector and the second feature vector to use as the input of the classification model. The classification mode is for classifying the technology field of the patent cases according to the information included in the first feature vector and the second feature vector.

Creating a training set is the most important part of model training. The creation of the traditional training set often requires a lot of manpower and material resources to label the training data. To improve the efficiency of labeling, a method for quickly labeling data is provided. The patent cases corresponding to the technology classification number and technical keywords are searched from the third-party database according to the technology classification number and technical keywords, and the searched patent cases are uniformly marked as the technology field category corresponding to the technology classification number and technical keywords. As a result, not only the training data is obtained quickly, but also the fast labeling of the training data is realized.

In one embodiment, the basic information further includes a qualification certificate number of the attorney. After obtaining the basic information of the attorney, the method further includes: obtaining an official practice experience of the attorney according to the qualification certificate number of the attorney; verifying the basic information of the attorney according to the official practice experience; performing the step of establishing the connection with the third-party database in response to the verification being successful; and returning a result of unsuccessful verification in response to the verification being unsuccessful.

In which, to ensure that the obtained basic information of the attorney is accurate, the obtained information needs to be verified after the basic information is obtained, and the verification includes: searching the official practice experience of the attorney according to the qualification certificate number of the attorney; and verifying the basic information of the attorney according to the official practice experience. For example, the official practice experience of the attorney may be obtained by interacting with the website of the All-China Agents Association so as to compare with the practice experience filled in the registration information to determine whether the filled information is accurate or not.

In one embodiment, analyzing all the patent case data corresponding to the attorney and obtaining the applicants of historical agent and the technical fields of historical agent of the attorney include: extracting applicant information in each case, and counting a number of cases corresponding to same applicant information; determining a main applicant according to the number of cases corresponding to each of the applicant information, where the main applicant is an applicant with the largest number of cases; obtaining a technology classification number and technical keywords of each case, and determining a technical field corresponding to each case according to the technology classification number and the technical keywords; and counting a number of cases corresponding to a same technical field, and determining a main technical field according to the number of cases corresponding to the same technical field.

In which, in order to show the relevant information of the attorney in more detail, the main applicants previously represented by the attorney, and the main technical fields of the historical agent are counted. The main applicant refers to the main customer of the historical service, and the main technical field refers to the main technical field of the historical service. For example, for the attorney Li San, the mainly served customers include company A, company B, company C, company D, and the like, and the main technical fields include field I, field II, field III, and the like. In this way, it will be convenient for the subsequent customers to have a more accurate understanding of the agent based on the personal introduction information of the attorney so as to choose the most suitable attorney for them.

When there is a large amount of patent attorney information, how to quickly choose a suitable attorney is also a difficult problem for customers. It will undoubtedly be time-consuming and labor-intensive to browse the personal introduction information of each patent attorney one by one. In addition, for non-professionals, the chosen attorney may not be the most suitable. Based on this, a data interaction-based information recommendation method is provided, which can quickly and accurately match patent attorneys and has a wide range of applications.

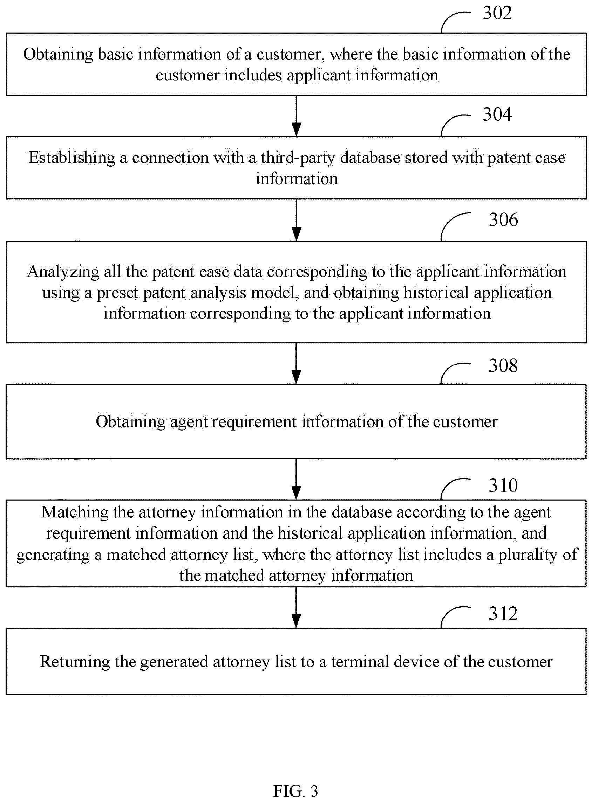

As shown in FIG. 3, a method for information recommendation based on data interaction is provided, and the method includes:

Step 302: obtaining basic information of a customer, where the basic information of the customer includes applicant information.

In which, the applicant information may be the name and surname of an individual or the name of a company. For a business customer, the applicant information refers to the full name of the business. A customer account may be associated with one or more applicant information. In addition, the basic information of the customer may further include enterprise qualification information, enterprise legal person information, and the like.

Step 304: establishing a connection with a third-party database stored with patent case information.

In which, the third-party database refers to a database that stores the patent case information which may be the patent search database of the China National Intellectual Property Administration, or other patent search databases such as PatSnap, Baiten, and incoPat. For the case submitted by an agency, its patent case information will include the information of the applicant.

Step 306: analyzing all the patent case data corresponding to the applicant information using a preset patent analysis model, and obtaining historical application information corresponding to the applicant information.

In which, the patent analysis model is for analyzing all the obtained patent case data to obtain the situation of the historical applications of the applicant. The historical application information includes at least one of the technical fields of the patent case of the historical application, historical cooperation agencies, and historical cooperation attorneys. The technical fields of the patent case may be analyzed through the technology classification number, and then information such as the historical cooperation agencies and attorneys may be extracted from the patent case data. The obtaining of the patent case data of the historical applications of the applicant is conducive to analyzing the actual needs of customers. In another embodiment, the technical fields may be determined through the technology classification number and the technical keywords extracted from the abstract information.

Step 308: obtaining agent requirement information of the customer.

In which, the agent requirement information refers to the customer's requirements for the attorney. The agency requirement information includes one or more of field requirement, level requirement, profession requirement, agency requirement, time limit requirement, location requirement, and the like. The field requirement refers to the requirement for the profession agent direction of the attorney. The profession agent direction may be divided into four kinds, namely software and communication, electronics, machinery, and biology and chemistry. The level requirement refers to the requirement for the professional level of the attorney. The higher the professional level of the attorney, the better the writing quality of the attorney, and the corresponding attorney fee will be higher. The profession requirements refer to the requirement for the major that the attorney has studied. For example, for the customers of LED technology, they often require the attorney to understand LED-related knowledge, so the attorney of the optoelectronic technology will be preferred. The agency requirement reflects the customer's trust in an agency. If the customer has cooperated happily with an agency before, the attorney of the agency may be preferred for cooperation. The time limit requirement refers to the time limit for the attorney to return the draft. For example, for a relatively urgent case, the customer will require the draft to be returned in a short time. The location requirements refer to the requirement for the location of the attorney. For example, if some customers want to communicate with the attorney in person, the attorney who is closer to them will be preferred.

Step 310: matching the attorney information in the database according to the agent requirement information and the historical application information, and generating a matched attorney list, where the attorney list includes a plurality of the matched attorney information.

In which, the agent requirement information and historical application information are synthesized and then matched with the attorney information in the database to generate the attorney list. The attorneys in the attorney list may be sorted from high to low according to the matching degree, so as to facilitate the subsequent choice of customers. The attorney here refers to a person engaged in patent agency work that is also known as "patent attorney" or "patent agent".

In one embodiment, the attorneys in the attorney list may also be sorted by multiple dimensions. For example, the dimensions may be divided into a professional dimension, that is, the highest degree of profession matching, a level dimension, that is, the highest degree of level matching, and an integrated dimension that is, the dimension ranking that integrate multiple indicators. Customers may choose the sorting dimensions according to the preference. As a result, it will be conducive to providing the customers with more flexible choices.

In one embodiment, it further needs to obtain the historical evaluation information corresponding to the customer, match with the attorney information in the database according to the agent requirement information, historical application information, and historical evaluation information, and generate the attorney list. In which, the historical evaluation information refers to the evaluation information of the customer on the attorney of the historical agent. The historical evaluation information can reflect the customer's recognition of the attorney of the historical agent. If the recognition degree is high, the attorney can be recommended first later; otherwise, the attorney will not be subsequently recommended later.

Step 312: returning the generated attorney list to a terminal device of the customer.

In which, the attorney list is returned to the terminal device of the customer, the customer chooses according to the attorney list, and the accuracy of choice is greatly improved.

The above-mentioned method, apparatus, device and storage medium for information recommendation based on data interaction first obtain customer information (applicant information), establish the connection with the third-party database, and analyze all the patent case data corresponding to the applicant to extract the history application information. Then, it is necessary to obtain the agent requirement information of the customer so as to perform attorney information matching according to the historical application information and agent requirement information, generate the matched attorney list, and return the generated attorney list to the terminal device of the customer. The method for information recommendation based on data interaction realizes the accurate recommendation of attorneys for customers through various information matching. In addition, the recommendation method is not limited to the recommendation within an agency, but is applicable to the recommendation of all attorneys, and has a wide range of applications.

In one embodiment, the historical application information includes: the technical field of the patent case of the historical application and the historical cooperation agencies and attorneys. Before analyzing all the patent case data corresponding to the applicant information using the preset patent analysis model, and obtaining the historical application information corresponding to the applicant information, the method further includes: grabbing all the patent case data corresponding to the applicant from the third-party database according to the applicant information.

In which, the applicant information is used as the search condition for grabbing all the patent case data corresponding to the applicant from the third-party database, so that the accuracy of the grabbed patent case data can be ensured.

In one embodiment, the historical application information corresponding to the applicant information is obtained by analyzing all the patent case data corresponding to the applicant information using the preset patent analysis model when the historical application information includes the technical field of the patent case of the historical application and the historical cooperation agencies and attorneys includes: extracting the technology classification number, technical keywords, name of agency and attorney corresponding to each patent case using the preset patent analysis model; determining the technical field corresponding to the patent case according to the technology classification number and the technical keywords; extracting the agency corresponding to each patent case, and counting a number of first cases in the historical agent of each agency, and sorting the historically cooperative agencies according to the number of first cases; and extracting the attorney corresponding to each patent case, counting a number of second cases in the agent of each attorney, and sorting the historically cooperative attorneys according to the number of second cases.

In which, the patent analysis model is for extracting the technology classification number, technical keywords, name of agency and attorney of each patent case. The technical field is for determining the technology to which the customer belongs, for example, electronic cigarettes or smart home. Then agency information is for obtaining the customer's preferred partner agency. The attorney information is for obtaining the customer's preferred partner attorney.

In one embodiment, the agent requirement information includes at least one of: field requirement, level requirement, profession requirement, and agency requirement, and the attorney information includes: level information, field information, profession information, and belonged agency information.

Matching with the attorney information in the database according to the agent requirement information, historical evaluation information and historical application information and generating the matched attorney list include: selecting candidate attorneys matching the agent requirement information based on the agent requirement information and the attorney information, calculating a matching degree with respect to each of the candidate attorneys according to the agent requirement information, the historical evaluation information and the historical application information, and generating the attorney list according to the matching degree. The attorney information in the attorney list is arranged according to the matching degree.

In which, the fields may be divided according to the actual needs. In one embodiment, the fields may be divided into four kinds, namely software and communication, electronics, machinery, and biology and chemistry. In another embodiment, the field may be further subdivided. For example, the software and communication may be further subdivided into pure software, combination of software and hardware, communication, and so on. The level requirement refers to the requirement for the professional level of the attorney. The attorneys are divided into a plurality of professional levels in advance, and the professional level reflects the professional level of the attorney. The profession requirement refers to the major that the attorney has studied. For example, the majors may be divided into optoelectronic communication, electromechanical automation, and the like. The agency refers to the agency where the attorney is located. The agency requirement may be divided into two types, one is clear requirement, that is, the agency is designated, and the other is vague requirement which only needs to specify the conditions that the agency needs to meet.

In one embodiment, obtaining agent requirement information of the customer may include: obtaining an agent requirement content input by the customer, performing semantic analysis on the agent requirement content, and extracting semantic information of the agent requirement content; and determining the agent requirement information of the customer based on the semantic information. The agent requirement information includes: at least one of field requirement, professional level requirement, profession requirement, and time limit requirement.

In which, the agent requirement content is the content input by the customer according to the actual needs. The input method may be voice input or manual input. For example, the customer input "I need an attorney of electrical technology and request to return the draft within 15 days" in voice. Through performing semantic analysis on the input content, the extracted agent requirement information of the customer will be: electrical field technology, and 15-day time limit.

In one embodiment, performing the semantic analysis on the agent requirement content and extracting the semantic information of the agent requirement content include: taking the agent requirement content as an input of a semantic analysis model, and extracting the semantic information of the agent requirement content using the semantic analysis model. The semantic information includes semantic relationship and semantic content.

In which, the semantic information is often used to represent intention information of the intention of the user. In one embodiment, the intent information may be represented in the form of a triplet, a combination of triples, an intent triplet, or a combination of intent triples. In one embodiment, the semantic information includes triples or a combination of triples. The triple refers to structural data in the form of (x, y, z) to identify x, y, z and the corresponding relationship. In one embodiment, the triple consists of a syntactic/semantic relationship and two concepts, entities, words or phrases. The intent triple is a user intent stored in the form of a triple, which is a small unit to identify a complete intent and can be identified as (subject, relation, object), where "subject" represents the first entity, and "relation" represents the relationship between "subject" and "object", "object" represents the second entity. For example, "I need the attorney of electrical technology" is represented in the triple as (i, need, attorney of electrical technology).

The training of the semantic analysis model often requires to create of a large amount of data. Since the application scenario of the semantic analysis model in this scheme is relatively special, the creation of the training data of the semantic analysis model has its particularity. Based on the particularity of the application scenario, a method to quickly create the training datasets for the semantic analysis model is provided. determining the candidate keywords for field requirement, the candidate keywords for professional level requirement, the candidate keywords for profession requirement, and the candidate keywords for time limit requirement;

> automatically generating a training sentence including the candidate keywords of the field requirement according to a preset template based on the candidate keywords of the field requirement, and using the candidate keywords of the corresponding field requirements as a semantic annotation of the training sentence;
> automatically generating a training sentence including the candidate keywords of the professional level requirement according to the preset template based on the candidate keywords of the professional level requirement, and using the corresponding candidate keywords as the semantic annotation of the training sentence;
> automatically generating a training sentence including the candidate keywords of the profession requirement according to the preset template based on the candidate keywords of the profession requirement, and using the corresponding candidate keywords as the semantic annotation of the training sentence; and
> automatically generating a training sentence including the candidate keywords of the time limit requirement according to the preset template bassed on the candidate keywords of the time limit requirement, and using the corresponding candidate keywords as the semantic annotation of the training sentence.

Through the above-mentioned method, the purpose of quickly creating a training data set can be achieved, which is conducive to improving the speed of model training while greatly reducing the cost.

In one embodiment, the attorney information includes: professional level information, field information, profession information, and time information; and matching with the attorney information in the database according to the agent requirement information, the historical evaluation information and the historical application information and generating the matched attorney list include: selecting the candidate attorneys matching the agent requirement information from the attorney information based on the agent requirement information; calculating a matching degree with respect to each candidate attorney according to the agent requirement information, the historical evaluation information, and the historical application information; and generating the attorney list according to the matching degree. The attorney information in the attorney list is arranged according to the matching degree.

In which, the information included in the agent requirement information is the relatively accurate requirement information, so the attorney that matches the agent requirement information may be selected as the candidate attorneys based on the agent requirement information first. For example, if the agent requirement information includes the professional level of the attorney, the attorneys that meet the professional level may be directly selected as the candidate attorneys, which is beneficial to reduce the computational workload for subsequent matching. After the candidate attorneys are obtained, further matching is required. The synthesized matching degree is calculated according to the agent requirement information, the historical evaluation information, and the historical application information to obtain the matching degree with respect to each candidate attorney. The arrangement according to the degree of matching is beneficial to the customer to choose the attorney with high matching degree first. In the above-mentioned process, the candidate attorneys are selected based on the agent requirement information first, and then the matching degree with respect to each candidate attorney is calculated, which is conducive to reducing the workload of the matching calculation and greatly improving the matching efficiency.

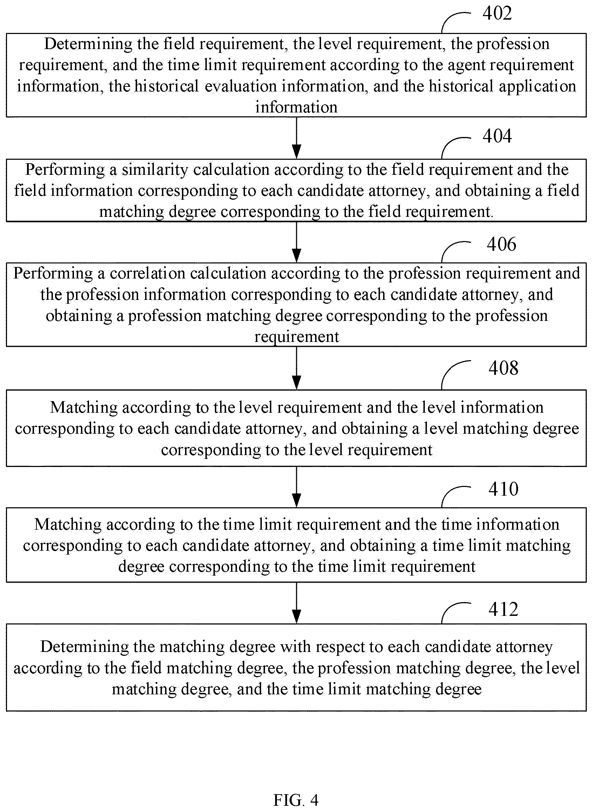

As shown in FIG. 4, in one embodiment, calculating the matching degree with respect to each candidate attorney according to the agent requirement information, the historical evaluation information, and the historical application information includes:

Step 402: determining the field requirement, the level requirement, the profession requirement, and the time limit requirement according to the agent requirement information, the historical evaluation information, and the historical application information.

In which, if the information of requirements included in the agent requirement information is relatively comprehensive, for example, including the field requirement, the agency requirement, and the profession requirement simultaneously, the information can be determined according to the agent requirement information. Otherwise, if the agent requirement information does not include so much information, it is necessary to analyze the missing information according to the historical application information and the historical evaluation information. Assume that there is no profession requirement in the agent requirement information, the profession requirement information of the customer may be analyzed according to the technical fields in the historical application information.

The level requirement may be null, that is, the user may not limit the level. Similarly, the profession requirement may also be null, and the time limit requirement may also be null, that is, the user may not limit the profession and time. However, the field requirement cannot be null because the attorneys of different fields are suitable for different kinds of cases. Therefore, in order to match the fields suitable for the case of the customer, the field requirement cannot be null.

Step 404: performing a similarity calculation according to the field requirement and the field information corresponding to each candidate attorney, and obtaining a field matching degree corresponding to the field requirement.

In which, the field matching degree may be calculated using the method of field similarity. In one embodiment, the field matching degree may be calculated using the following equation. First, the field requirement may be expressed in the form of a vector. Similarly, the field information of the attorney may be also represented as a vector.

$$D = \frac{\sum_{i=1}^{n} x_i y_i}{\sqrt{\sum_{i=1}^{n} x_i^2} \sqrt{\sum_{i=1}^{n} y_i^2}} \; ;$$

In which, D represents the field similarity, $x_i$ represents the i-th eigenvalue in a field requirement vector, and $y_i$ represents the i-th eigenvalue in a field information vector.

Step 406: performing a correlation calculation according to the profession requirement and the profession information corresponding to each candidate attorney, and obtaining a profession matching degree corresponding to the profession requirement.

In which, the profession matching degree may be calculated using the method of profession similarity. In one embodiment, the profession matching degree may be calculated using the following equation:

$$d = \sqrt{\sum_{i=1}^{n} (x_i - y_i)^2} \; ;$$

where, d represents the profession similarity, $x_i$ represents the i-th eigenvalue in a profession requirement vector, and $y_i$ represents the $i$-th eigenvalue in a profession information vector.

Step 408: matching according to the level requirement and the level information corresponding to each candidate attorney, and obtaining a level matching degree corresponding to the level requirement.

In which, the matching rules between levels may be set in advance. For example, the matching degree of the same levels may be 100%, and the matching of the level may take the higher ones rather than taking the lower ones by, as an example, if the customer requires the level to be level two, the matching degree between level two and a level lower than level two may be set to 0. In addition, the matching degree higher than level two may be gradually reduced. For example, the matching degree between level three and level two is 80%, the matching degree between level four and level two is 60%, and so on.

Step 410: matching according to the time limit requirement and the time information corresponding to each candidate attorney, and obtaining a time limit matching degree corresponding to the time limit requirement.

In which, the rules of the matching degree between time limits may be set according to actual needs, and the matching of the level may take the lower ones rather than taking the higher ones by, as an example, if the customer requires the time limit of 10 days for returning the draft, the time information may be returning the draft in less than 10 days, and the corresponding matching degree will be set to 0 when exceeding 10 days.

Step 412: determining the matching degree with respect to each candidate attorney according to the field matching degree, the profession matching degree, the level matching degree, and the time limit matching degree.

In which, after the field matching degree, the profession matching degree, the level matching degree and the time limit matching degree are known, a synthesized matching degree may be obtained by synthesizing a plurality of matching degrees, and the synthesized matching degree may be used as the matching degree with respect to the candidate attorneys. By synthesizing multiple factors for matching, it will be conducive to providing the customers with more suitable attorneys.

In one embodiment, determining the matching degree with respect to each candidate attorney according to the field matching degree, the profession matching degree, the level matching degree, and the time limit matching degree includes: obtaining preference information of the customer from the agent requirement information and the historical evaluation information, where the preference information includes: preference degrees of the customer for the field requirement, the profession requirement, the level demand, and time limit requirement; using the preference information as an input of the weight analysis model, and obtaining a field weight corresponding to the field matching degree, a profession weight corresponding to the profession matching degree, a level weight corresponding to the level requirement and a time limit weight corresponding to the time limit requirement that are output by the weight analysis model; and calculating the matching degree with respect to each candidate attorney according to the field matching degree, the field weight, the profession matching degree, the profession weight, the level requirement, the level weight, the time limit requirement, and the time limit weight.

In which, because different customers have different preference for each factor, in order to match a more suitable attorney, it is necessary to determine the weight of each factor using the weight analysis model according to the preference information of the customer. Then, the matching degree with respect to each candidate attorney is calculated by means of weighted summation.

In order to quickly recommend the matched patent attorneys for customers, an attorney information database and a customer information database are established on the information processing platform in advance. In this way, when a customer needs a recommendation for attorneys, the historical application information may be obtained from the customer information database after obtaining attorney requirement information.

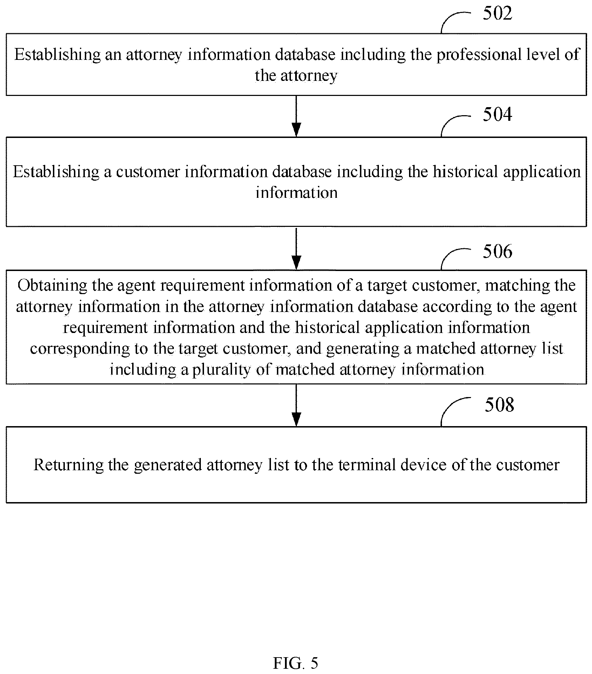

As shown in FIG. 5, in one embodiment, an information interaction method applied to the information processing platform includes:

Step 502: establishing an attorney information database including the professional level of the attorney.

In which, the attorney information database stores the personal introduction information of the attorney, and the personal introduction information of the attorney includes the professional level of the attorney. In addition, the personal introduction information of the attorney may further include: the main applicant(s) of historical agent and the main technical field(s) of historical agent. The personal introduction information of the attorney is obtained through the above-mentioned method for information processing based on data interaction.

Step 504: establishing a customer information database including the historical application information.

In which, the customer information database stores a lot of customer information, each customer information includes: the historical application information, and the historical application information refers to the information obtained by analyzing patent document data of the historical applications of the customer, which includes at least one of: the technical field of the patent cases of the historical applications, the historical cooperation agencies, and the historical cooperation attorneys.

In one embodiment, the customer information database further includes: the historical evaluation information; and the historical evaluation information refers to the customer's evaluation of the historical cooperation attorney, which includes: profession evaluation, service attitude evaluation, and the like.

The matching with the attorney information in the attorney information database according to the agent requirement information, and the historical application information corresponding to the target customer, and generating the matched attorney list, include:

matching with the attorney information in the attorney information database according to the agent requirement information and the historical application information and historical evaluation information corresponding to the target customer, and generating the matched attorney list. That is, the attorney list is obtained by matching with the attorney information according to the agent requirement information, the historical application information, and the historical evaluation information at the same time.

Step 506: obtaining the agent requirement information of a target customer, matching the attorney information in the attorney information database according to the agent requirement information and the historical application information corresponding to the target customer, and generating a matched attorney list including a plurality of matched attorney information.

In which, the agency requirement information refers to the more accurate requirement information input by the customer, which includes one or more of: the professional level requirement for the attorney, the profession requirement for the attorney, the practice duration requirement in years for the attorney, the time limit for the completion of the case, and the like. The agent requirement information and the historical application information are synthesized to match with the attorney information in the database, and the attorney list is generated. The attorneys in the attorney list may be sorted from high to low according to the matching degree, so as to facilitate the subsequent choice of customers.

In another embodiment, the method further includes: obtaining the historical evaluation information of the target customer, matching with the attorney information in the attorney information database according to the agent requirement information and the historical application information and historical evaluation information corresponding to the target customer, and generating the matched attorney list.

Step 508: returning the generated attorney list to the terminal device of the customer.

In which, the attorney list is returned to the terminal device of the customer, the customer chooses according to the attorney list, and the choice accuracy is greatly improved.

In the above-mentioned information interaction method, the attorney information database and the customer information database are established on the information processing platform in advance, so that when the customer needs a recommendation for attorneys, the historical application information and the historical evaluation information can be directly obtained from the customer information database after obtaining the attorney requirement information, and the matched attorney list is obtained by matching with the attorney information in the attorney information database based on the agent requirement information, historical application information and historical evaluation information of three aspects, and then the attorney list is returned to the terminal device of the customer as the recommendation result. In the information interaction method, since the attorney information database and the customer information database are established in advance, the matched patent attorneys can be quickly and accurately recommended for the customer.

In one embodiment, the above-mentioned information interaction method further includes: receiving an intended attorney selected from the attorney list that is sent by the terminal device of the customer, and sending an intention request of the customer to a terminal device of the intended attorney; receiving an intention result sent by the terminal device of the intended attorney; when the intention result is agree, establish an instant communication connection channel between the terminal device of the customer and the terminal device of the attorney, where the instant communication connection channel is for performing case communications between the customer and the attorney; and storing the case communication process between the customer and the attorney as a case communication process document, where the case communication process document is stored in association with the corresponding patent case.

In which, after the attorney list is pushed to the terminal device of the customer, the customer chooses the intended attorney from the attorney list. Due to the two-way choices on the information processing platform, it is also necessary to send the intention request to the terminal device of the intended attorney for confirmation. Only after the intended attorney agrees to the entrustment, the instant communication connection channel between the terminal device of the customer and the terminal device of the attorney is established. The customer and the attorney can communicate for the cases through the instant communication connection channel, and the communication process document is stored, which is convenient for the subsequent reviewing where there is a disagreement, and also facilitates the attorney to repeatedly review the communication process document to understand the technical scheme. By storing the case communication process documents in association with the corresponding patent documents, it is also convenient to check the communication records corresponding to the case in the future, without the need to search from a large amount of information.

At present, the information of all instant messaging tools is stored uniformly, and when a certain time point or event needs to be viewed, it is necessary to search from numerous historical chat records, which is inefficient. In this method, the case communication process document is stored in association with the corresponding patent case in an innovative manner, so that the communication process of each case can be quickly viewed in the future.

In one embodiment, the above-mentioned information interaction method further includes: encrypting and storing the case communication process document to ensure the security of the information of the customer.

In one embodiment, the above-mentioned method further includes: establishing a customer case information database, which includes: grabbing published patent case information corresponding to customer information from the third-party database by interacting with the third-party database, where the published patent case information includes: a case examination status; obtaining pending patent case information corresponding to the customer, where the pending patent case information includes: a case processing status; and storing the published patent case information and pending patent case information corresponding to a same customer in the customer case information database corresponding to the same customer, where one customer corresponds to one customer case information database.

In which, in order to facilitate customers to manage and view their own cases, a customer case information database is established for each customer on the information processing platform, and the published patent case data of the customer is grabbed from the third-party database to store in the customer case information database. In addition, the pending patent case information corresponding to the customer is added to the customer case information database, so that customers can quickly check the status of all cases by logging into the information processing platform. In this way, the customers can directly manage cases through the information processing platform, so that customers can more quickly and accurately know the status of each case. Compared with the existing method that the status of the case can only find out by inquiring to the agency, this method is undoubtedly faster and more accurate.

In one embodiment, the above-mentioned method further includes: receiving a case viewing request sent by the terminal device of the customer; and obtaining authority information corresponding to the customer in response to the request, and obtaining patent case information corresponding to the authority information from the customer case information database to return to the terminal device of the customer for display.

In which, after the terminal device of the customer logs in to the information processing platform, there are many ways to send the case viewing request and trigger the case viewing request, for example, directly clicking a case query button.

Different customers have different permissions. Some customers have permissions to view all the case information, while other customers can only view their own corresponding cases. For example, for the same company, the users may be divided into managers and ordinary employees. The manager's authority can be allowed to view the cases of all ordinary employees, while ordinary employees can only be allowed to view their corresponding cases. The setting of permissions is beneficial to the confidentiality of information. In the above-mentioned process, after obtaining the case request, the authority corresponding to the customer is determined first, and then the patent case information corresponding to the authority information is returned to the terminal device of the customer for display. This method greatly improves the flexibility of case inquiry, and it is beneficial to information security by setting the authority information in the inquiry process.

In one embodiment, the published patent case information further includes patent examination process documents, and the patent examination process documents include one or more of: acceptance notice, correction notice, examination opinion notice, and examination response document. The pending patent case information includes patent processing process documents, and the patent processing process documents include one or more of: technical disclosure document, case communication process document, and case draft.

In which, the above-mentioned published patent case information further includes process document generated during patent examination. The process documents include one or more of: acceptance notice, correction notice, examination opinion notice and examination response document. The information processing platform may directly receive the examination process documents (i.e., the acceptance notice, the correction notice, and the examination opinion notice) issued by the official, and then the received examination process documents are stored in association with the corresponding case. In this way, customers can query and obtain all relevant documents on the information processing platform, which is convenient and quick.

In one embodiment, establishing the attorney information database includes: obtaining the basic information of the attorney including the name and surname of the attorney and the practice experience, where the practice experience includes the name of the agency corresponding to the practice period of the attorney; establishing the connection with the third-party database, where the third-party database is stored with the patent case information including the name of the agency and the name and surname of the attorney; extracting all the patent cases corresponding to the attorney from the third-party database according to the name and surname of the attorney and the practice experience; processing all the patent case data corresponding to the attorney using the established patent case data processing model, and counting the historical grant rate of the attorney; extracting the preset number of to-be-evaluated patent cases within the preset period in years from all the patent case data corresponding to the attorney; performing technical analysis on the to-be-evaluated patent cases, and determining the technical field to which the to-be-evaluated patent cases belongs; sending the to-be-evaluated patent cases to the expert corresponding to the technical field for review according to the technical field, and receiving the returned review result; obtaining the historical service evaluation information corresponding to the attorney; determining the professional level of the attorney according to the preset algorithm based on the historical grant rate of the attorney, the review result and the historical service evaluation information; analyzing and processing all the patent case data corresponding to the attorney, and obtaining the main applicant of historical agent and the main technical field of historical agent of the attorney; generating the personal introduction information corresponding to the attorney according to the preset template based on the professional level of the attorney, the main applicant of historical agent, and the main technical field of historical agent; and storing the personal introduction information corresponding to the attorney in the attorney information database.

In one embodiment, establishing the customer information database includes: obtaining the basic information of the customer, where the basic information includes the applicant information; establishing the connection with the third-party database storing the patent case information; grabbing all the patent case data corresponding to applicant information from the third-party database; analyzing all the patent case data corresponding to applicant information using the preset patent analysis model, and obtaining the historical application information corresponding to the applicant information, where the historical application information includes: the technical fields of the patent cases of the historical applications, the historical cooperation agencies, and the historical cooperation attorneys; and storing the historical application information corresponding to the customer in the customer information database.

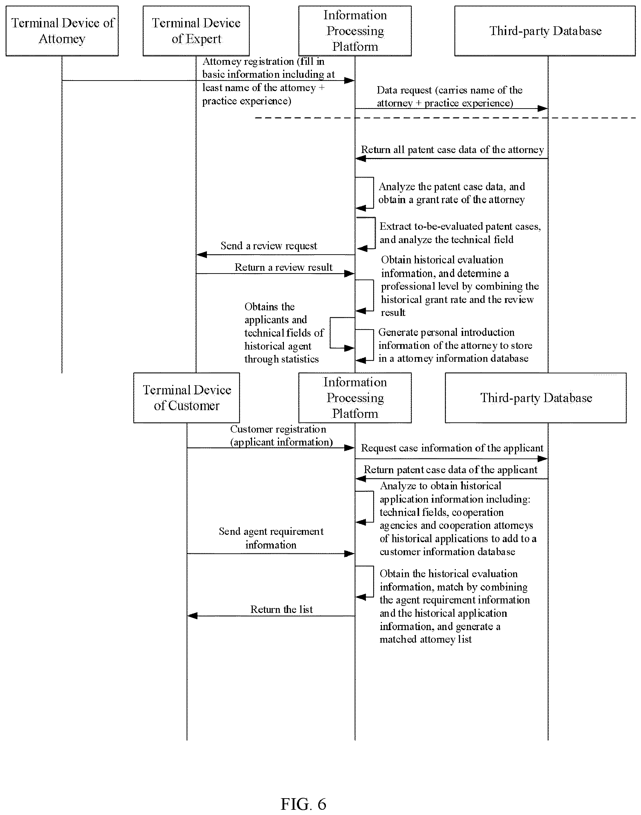

FIG. 6 is a timing diagram of the process of information exchange, which includes two parts. The first part is the timing diagram of generating the personal introduction information of the attorney, and the second part is the timing diagram of recommending the attorney.

The first part: first, an attorney registers through the terminal device of the attorney. During the registration, the basic information of the attorney needs to be filled in. The basic information of the attorney includes: the name and surname of the attorney and the practice experience. After receiving the basic information of the attorney, the information processing platform sends a data request (which carries the name and surname of the attorney + the practice experience) to the third-party database, and receives the patent case data returned by the third-party database. Then the information processing platform analyzes the patent case data, and counts the historical grant rate. In addition, the information processing platform further extracts a preset number of to-be-evaluated patent cases within a preset period in years from the patent case data, and performs technical analysis to determine the technical field to which the to-be-evaluated patent cases belongs; and then, sends the to-be-evaluated patent case to the corresponding experts for review, and receives the returned review result. In addition, the information processing platform obtains the historical service evaluation information corresponding to the attorney from its own database; then determines the professional level of the attorney according to the historical grant rate of the attorney, the review result, and the historical service evaluation information. In addition, the information processing platform counts and obtains the main applicants of historical agent and the main technical fields of historical agent of the attorney by analyzing all the patent case data corresponding to the attorney; and finally, generates the personal introduction information corresponding to the attorney according to a preset template based on the professional level of the attorney, the main applicants of historical agent, and the main technical fields of historical agent, and stores the generated personal introduction information in the attorney information database.

The second part: a customer registers on the information processing platform through the terminal device of the customer, and fills in the customer's basic information (at least includes the applicant information) during registration. The information processing platform grabs the corresponding patent case data from the third-party database according to the applicant information, analyzes all the patent case data corresponding to the applicant information using a preset patent analysis model, and obtains the historical application information corresponding to the applicant information to add to the customer information database, where the historical application information includes: the technical fields of the patent cases of the historical applications, the historical cooperation agencies and attorneys. In addition, the information processing platform further obtains the agent requirement information sent by the terminal device of the customer, and obtains the historical evaluation information corresponding to the customer from its own database, and finally matches with the attorney information in the database according to the agent requirement information, the historical evaluation information, and the historical application information, and generates the matched attorney list including multiple matched attorney information; and returns the generated attorney list to the terminal device of the customer. The terminal device of the customer selects the intended attorney, which is then sent by the information processing platform to the terminal device of the attorney for confirmation, and after the attorney agrees, an agreement is reached.

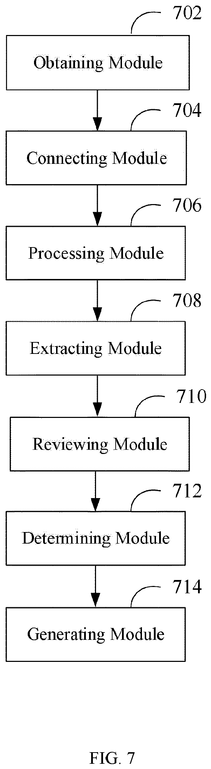

As shown in FIG. 7, an apparatus for information processing based on data interaction is provided., and the apparatus includes:

an obtaining module 702 used to obtain basic information of an attorney, wherein the basic information includes identification information of the attorney;
a connecting module 704 used to establish a connection with a third-party database, where the third-party database stores patent case information, and the patent case information includes the identification information of the attorney;
a processing module 706 used to process all patent case data corresponding to the attorney using a established patent case data processing model, and calculate a historical grant rate of the attorney within a preset time;
an extracting module 708 used to extract a preset number of to-be-evaluated patent cases within a preset period in years from all the patent case data corresponding to the attorney;
a reviewing module 710 used to send the to-be-evaluated patent cases to a corresponding expert for review, and receive a returned review result; and
a determining module 712 used to determine a professional level of the attorney according to a preset algorithm based on the historical grant rate of the attorney and the review result; and
a generating module 714 used to generate the personal introduction information corresponding to the attorney according to a preset template based on the professional level of the attorney.

In one embodiment, the above-mentioned apparatus further includes: an extraction module used to extract all the patent case data corresponding to the attorney from the third-party database according to the name and surname of the attorney and the practice experience of the attorney.

In one embodiment, the basic information further includes profession agent direction; and the extracting module 708 is further used to select candidate patent case data matching the profession agent direction from all the patent case data corresponding to the attorney; and extract the to-be-evaluated patent cases within the preset period in years from the candidate patent case data.

In one embodiment, the processing module 706 is further used to extract a legal status from all the patent case data corresponding to the attorney using the established patent case data processing model, where the legal status includes one of: granted, examination in progress, refused, and withdrawn, and the patent case data processing model is for determining a regular expression corresponding to the legal status and extracting the legal status of the patent case based on the regular expression; count a number of granted cases with the legal status of granted, a number of refused cases with the legal status of refused, and a number of withdrawn cases with the legal status of withdrawn; and calculate the historical grant rate according to the number of the granted case, the number of the refused cases, and the number of the withdrawn cases.

In one embodiment, the processing module 706 is further used to count the number of the granted case, the number of the refused cases, and the number of the withdrawn cases in a preset number of closed cases closest to a current time; and calculate a latest historical grant rate according to the number of the granted case, the number of the refused cases, and the number of the withdrawn cases in the preset number of closed cases closest to the current time.

In one embodiment, the processing module 706 is further used to select candidate patent cases with a filing date within a preset time period; count the number of the granted cases with the granted status, the number of the refused cases with the refused status, and the number of the withdrawn cases with the withdrawn status in the candidate patent cases; and calculate the historical grant rate corresponding to the preset time period according to the number of the granted cases with the granted status, the number of the refused cases with the refused status, and the number of the withdrawn cases with the withdrawn status in the candidate patent cases.

In one embodiment, the determining module 712 is further used to obtain practice duration in years of the attorney and a total number of historical case filings of the attorney, and using the practice duration in years and the total number of historical case filings as inputs to a weight determination model, where the weight determination model is trained based on a deep neural network model; obtain a first weight corresponding to the historical grant rate of the attorney, a second weight corresponding to the review result and a third weight corresponding to the historical service evaluation information output by the weight determination model; and determine the professional level of the attorney according to the historical grant rate and the first weight, the review result and the second weight, and the historical service evaluation information and the third weight.

In one embodiment, the extracting module is further used to determine target search conditions according to the name and surname of the attorney and the practice experience of the attorney, where the target search conditions include the name and surname of the attorney, and a name of practicing agency and the corresponding practice period; and extract all the patent case data corresponding to the attorney from the third-party database according to the target search conditions.

In one embodiment, the above-mentioned apparatus further includes an analyzing module used to analyze all the patent case data corresponding to the attorney, and obtain applicants of historical agent and technical fields of historical agent of the attorney.

The analyzing module is further used to grab classification number information and abstract information of each patent case in all the patent case data corresponding to the attorney, analyze the abstract information, and extract technical keywords; and use the classification number information and the technical keywords as inputs of a technology field classification model, determine a technology field category corresponding to the patent case of the attorney, and use the determined technology field category as a technical field label of the patent case.

In one embodiment, the technology field classification model includes: a first feature model, a second feature model, and a classification model. The first feature model is for determining a first feature vector corresponding to the classification number according to the classification number, the second feature model is for determining a second feature vector corresponding to the technical keywords, and the classification model is for determining the technology field category corresponding to the patent case based on the first feature vector and the second feature vector.

In one embodiment, the basic information further includes a qualification certificate number of the attorney, and the above-mentioned apparatus further includes:

a verifying module used to obtain an official practice experience of the attorney according to the qualification certificate number of the attorney; verify the basic information of the attorney according to the official practice experience; notify the connecting module to establishing the connection with the third-party database in response to the verification being successful; and return a result of unsuccessful verification in response to the verification being unsuccessful.

In one embodiment, the counting module is further used to extract applicant information of each case, and count a number of cases corresponding to same applicant information; determine a main applicant according to the number of cases corresponding to each applicant information, where the main applicant is an applicant with the largest number of cases; obtain a technology classification number and technical keywords of each case, and determine the technical field corresponding to each case according to the technology classification number and technical keywords; and count a number of cases corresponding to a same technical field, and determine a main technical field according to the number of cases corresponding to the same technical field.

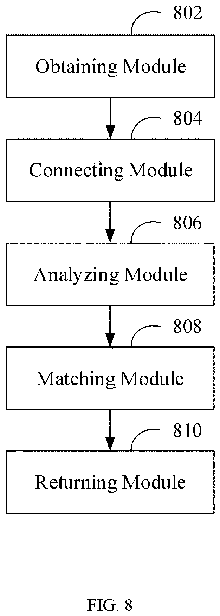

As shown in FIG. 8, an apparatus for information recommending based on data interaction is provided, which includes:

an obtaining module 802 used to obtain basic information of a customer, where the basic information of the customer includes applicant information;
a connecting module 804 used to establish a connection with a third-party database stored with patent case information;
an analyzing module 806 used to analyze all the patent case data corresponding to the applicant information using a preset patent analysis model, and obtain historical application information corresponding to the applicant information, where the historical application information includes: the technical fields of the patent cases of the historical applications, the historical cooperation agencies, and the historical cooperation attorneys;
where the obtaining module 802 is further used to obtain agent requirement information of the customer;
a matching module 808 used to match the attorney information in the database according to the agent requirement information and the historical application information, and generate a matched attorney list, where the attorney list includes a plurality of the matched attorney information; and
a returning module 810 used to return the generated attorney list to a terminal device of the customer.

In one embodiment, the above-mentioned apparatus further includes a grabbing module used to grab all the patent case data corresponding to the applicant from the third-party database according to the applicant information.

In one embodiment, the analyzing module is further used to extract the technology classification number, technical keywords, name of agency and attorney corresponding to each patent case using the preset patent analysis model; determine the technical field corresponding to the patent case according to the technology classification number and the technical keywords; extract the agency corresponding to each patent case, and count a number of first cases in the historical agent of each agency, and sort the historically cooperative agencies according to the number of first cases; extract the attorney corresponding to each patent case, count a number of second cases in the agents of each attorney, and sort the historically cooperative attorneys according to the number of second cases.

In one embodiment, the obtaining module 802 is further used to obtain an agent requirement content input by the customer, perform a semantic analysis on the agent requirement content, and extract semantic information of the agent requirement content; and determine the agent requirement information of the customer based on the semantic information. The agent requirement information includes at least one of: field requirement, professional level requirement, profession requirement, and time limit requirement.

In one embodiment, the attorney information includes professional level information, field information, profession information, and time information. The matching module 808 is further used to select the candidate attorneys matching the agent requirement information from the attorney information based on the agent requirement information; calculate a matching degree with respect to each candidate attorney according to the agent requirement information, the historical evaluation information, and the historical application information; and generate the attorney list according to the matching degree. The attorney information in the attorney list is arranged according to the matching degree.

In one embodiment, the matching module is further used to determine the field requirement, the level requirement, the profession requirement, and the time limit requirement according to the agent requirement information, the historical evaluation information, and the historical application information; perform a similarity calculation according to the field requirement and the field information corresponding to each candidate attorney, and obtain a field matching degree corresponding to the field requirement; perform a correlation calculation according to the profession requirement and the profession information corresponding to each candidate attorney, and obtain a profession matching degree corresponding to the profession requirement; match according to the level requirement and the level information corresponding to each candidate attorney, and obtain a level matching degree corresponding to the level requirement; match according to the time limit requirement and the time information corresponding to each candidate attorney, and obtain a time limit matching degree corresponding to the time limit requirement; and determine the matching degree with respect to each candidate attorney according to the field matching degree, the profession matching degree, the level matching degree, and the time limit matching degree.

In one embodiment, the matching module is further used to: obtain preference information of the customer from the agent requirement information and the historical evaluation information, where the reference information includes the preference degrees of the customer for the field requirement, the profession requirement, the level demand, and time limit requirement; use the preference information as an input of the weight analysis model, and obtain a field weight corresponding to the field matching degree, a profession weight corresponding to the profession matching degree, a level weight corresponding to the level requirement and a time limit weight corresponding to the time limit requirement that are output by the weight analysis model; and calculate the matching degree with respect to each of the candidate attorneys according to the field matching degree, the field weight, the profession matching degree, the profession weight, the level requirement, the level weight, the time limit requirement, and the time limit weight.

In one embodiment, the attorney information includes level information. The level information is determined by the following manners of: obtaining the basic information of the attorney, where the basic information of the attorney includes the name and surname of the attorney and the practice experience, and the practice experience includes the name of the agency corresponding to the practice period of the attorney; establishing the connection with the third-party database, where the third-party database is stored with the patent case information including the name of the agency and the name and surname of the attorney; extracting all the patent cases corresponding to the attorney from the third-party database according to the name and surname of the attorney and the practice experience; processing all the patent case data corresponding to the attorney using the established patent case data processing model, and counting the historical grant rate of the attorney; extracting the preset number of to-be-evaluated patent cases within the preset period in years from all the patent case data corresponding to the attorney; performing technical analysis on the to-be-evaluated patent cases, and determining the technical field to which the to-be-evaluated patent cases belongs; sending the to-be-evaluated patent cases to the expert corresponding to the technical field for review according to the technical field, and receiving the returned review result; obtaining the historical service evaluation information corresponding to the attorney; and determining the professional level of the attorney according to the preset algorithm based on the historical grant rate of the attorney, the review result and the historical service evaluation information.

In one embodiment, the above-mentioned information recommending based on data interaction further includes: a communication establishing module used to receive an intended attorney selected from the attorney list that is sent by the terminal device of the customer, and send an intention request of the customer to a terminal device of the intended attorney; receive an intention result sent by the terminal device of the intended attorney; and when the intention result is agree, establish an instant communication connection channel between the terminal device of the customer and the terminal device of the attorney, where the instant communication connection channel is for performing case communications between the customer and the attorney.

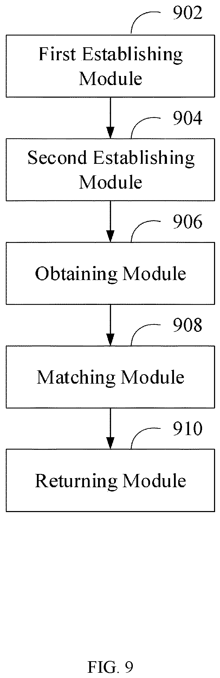

As shown in FIG. 9, an information interaction apparatus is provided, which includes:

a first establishing module 902 used to establish an attorney information database including a plurality of attorney information, where each attorney information includes a professional level of an attorney;
a second establishing module 904 used to establish a customer information database including a plurality of customer information, where each customer information includes historical application information;
an obtaining module 906 used to obtain agent requirement information of a target customer;
a matching module 908 used to match with the attorney information in the attorney information database according to the agent requirement information and the historical application information corresponding to the target customer, and generate a matched attorney list including a plurality of the matched attorney information; and
a returning module 910 used to return the generated attorney list to a terminal device of the customer.

In one embodiment, the above-mentioned information interaction apparatus further includes:

a receiving module used to receive an intended attorney selected from the attorney list that is sent by the terminal device of the customer, and send an intention request of the customer to a terminal device of the intended attorney; receive an intention result sent by the terminal device of the intended attorney;
a communication establishing module used to, when the intention result is agree, establish an instant communication connection channel between the terminal device of the customer and the terminal device of the attorney, where the instant communication connection channel is for performing case communications between the customer and the attorney; and
a storing module used to store the case communication process between the customer and the attorney as a case communication process document, where the case communication process document is stored in association with the corresponding patent case.

In one embodiment, the first establishing module is further used to grab published patent case information corresponding to customer information from the third-party database by interacting with the third-party database, where the published patent case information includes a case examination status; obtain pending patent case information corresponding to the customer, where the pending patent case information includes a case processing status; and store the published patent case information and pending patent case information corresponding to a same customer in the customer case information database corresponding to the same customer, where one customer corresponds to one customer case information database.

In one embodiment, the above-mentioned information interaction apparatus further includes:
a searching module used to receive a case viewing request sent by the terminal device of the customer, obtain authority information corresponding to the customer in response to the request, and obtain patent case information corresponding to the authority information from the customer case information database to return to the terminal device of the customer for display.

In one embodiment, the published patent case information further includes: patent examination process documents, and the patent examination process documents include one or more of: acceptance notice, correction notice, examination opinion notice, and examination response document. The pending patent case information includes: patent processing process documents, and the patent processing process documents include one or more of: technical disclosure document, case communication process document, and case draft.

In one embodiment, the second establishing module is further used to obtain the basic information of the attorney including the name and surname of the attorney and the practice experience, where the practice experience includes the name of the agency corresponding to the practice period of the attorney; establish the connection with the third-party database, where the third-party database is stored with the patent case information including the name of the agency and the name and surname of the attorney; extract all the patent cases corresponding to the attorney from the third-party database according to the name and surname of the attorney and the practice experience; process all the patent case data corresponding to the attorney using the established patent case data processing model, and count the historical grant rate of the attorney; extract the preset number of to-be-evaluated patent cases within the preset period in years from all the patent case data corresponding to the attorney; perform technical analysis on the to-be-evaluated patent cases, and determine the technical field to which the to-be-evaluated patent cases belongs; send the to-be-evaluated patent cases to the expert corresponding to the technical field for review according to the technical field, and receive the returned review result; obtain the historical service evaluation information corresponding to the attorney; determine the professional level of the attorney according to the preset algorithm based on the historical grant rate of the attorney, the review result and the historical service evaluation information; analyze all the patent case data corresponding to the attorney, and obtain the main applicant of historical agent and the main technical field of historical agent of the attorney; generating the personal introduction information corresponding to the attorney according to the preset template based on the professional level of the attorney, the main applicant of historical agent, and the main technical field of historical agent; and store the personal introduction information corresponding to the attorney in the attorney information database.

In one embodiment, the above-mentioned apparatus further includes a third establishing module used to: obtain the basic information of the customer, where the basic information includes the applicant information; establish the connection with the third-party database storing the patent case information; grab all the patent case data corresponding to applicant information from the third-party database; analyze all the patent case data corresponding to applicant information using the preset patent analysis model, and obtain the historical application information corresponding to the applicant information, where the historical application information includes: the technical fields of the patent cases of the historical applications, the historical cooperation agencies, and the historical cooperation attorneys; and store the historical application information corresponding to the customer in the customer information database.

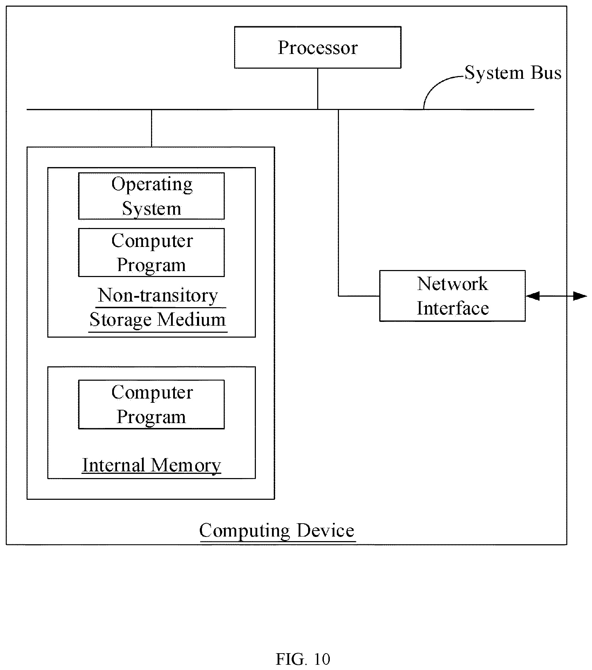

FIG. 10 is a schematic block diagram of the internal structure of a computer device according to an embodiment. The computer device may be a server, and the computer device includes a processor and a storage connected by a system bus. In which, the storage may include a non-transitory storage medium and an internal memory. The non-transitory storage medium of the computer device stores an operating system, and may further store computer program(s) so that when the computer program(s) are executed by the processor, the processor can be made to realize the above-mentioned method for information processing based on data interaction, or method for information recommending based on data interaction, or information interaction method. The internal memory may also store with computer program(s) so that when the computer program(s) are executed by the processor, the processor can be made to perform the above-mentioned method for information processing based on data interaction, or method for information recommending based on data interaction, or information interaction method. Those skilled in the art can understand that the structure shown in FIG. 10 is only a block diagram of a partial structure related to the scheme of the present application, and does not constitute a limitation on the computer device to which the scheme of the present application is applied. The real computer device may include more or fewer components than shown in the figures, or combine certain components or have a different arrangement of components.

A non-transitory computer-readable storage medium storing computer program(s). When the computer program(s) are executed by a processor, the processor is made to perform the steps of the above-mentioned method for information processing based on data interaction, or method for information recommending based on data interaction, or information interaction method.

A computer device including a storage and a processor. The storage stores computer program(s). When the computer program(s) are executed by a processor, the processor is made to perform the steps of the above-mentioned method for information processing based on data interaction, or method for information recommending based on data interaction, or information interaction method.

It should be noted that, the above-mentioned method, apparatus, computer device and storage medium for information processing based on data interaction, the above-mentioned method, apparatus, computer device and storage medium for information recommending based on data interaction, and the above-mentioned information interaction method, apparatus, computer device and storage medium have the same or corresponding technical features, and the above-mentioned corresponding embodiments may be applicable to each other.

Those of ordinary skill in the art can understand that all or part of the processes in the methods of the forgoing embodiments can be implemented by instructing relevant hardware through a computer program. The program can be stored in a non-transitory computer-readable storage medium. When the program is executed, it may perform the process of the forgoing method embodiments. In which, any reference to memory, storage, database or other medium used in the various embodiments provided in the present application may include non-transitory and/or transitory memory. The non-transitory memory may include read only memory (ROM), programmable ROM (PROM), electrically programmable ROM (EPROM), electrically erasable programmable ROM (EEPROM), or flash memory. The transitory memory may include random access memory (RAM) or external cache memory. By way of illustration but not limitation, RAM may be in various forms such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), rambus direct RAM (RDRAM), direct rambus dynamic RAM (DRDRAM), and rambus dynamic RAM (RDRAM).

The technical features of the forgoing embodiments may be combined arbitrarily. To make the description simple, not all possible combinations of the technical features in the above embodiments are described. However, as long as there is no contradiction in the combination of these technical features, the combination will be considered to be within the scope described in this specification.

The forgoing embodiments only represent several embodiments of the present application, and the descriptions thereof are relatively specific and detailed, but should not be construed as limitations on the scope of the present application. It should be pointed out that, for those skilled in the art, several modifications and improvements can be made without departing from the concept of the present application, and these modifications and improvements are all within the scope of the present application. Therefore, the scope of the present application shall be subject to the appended claims.

**Claims**

1. A method for information processing based on data interaction, applied to an information processing platform, comprising:

   obtaining basic information of an attorney, wherein the basic information comprises identification information of the attorney;
   establishing a connection with a third-party database, wherein the third-party database stores patent case information, and the patent case information comprises the identification information of the attorney;
   processing all patent case data corresponding to the attorney using a established patent case data processing model, and calculating a historical grant rate of the attorney within a preset time;
   extracting a preset number of to-be-evaluated patent cases within a preset period in years from all the patent case data corresponding to the attorney;
   sending the to-be-evaluated patent cases to a corresponding expert for review, and receiving a returned review result;
   determining a professional level of the attorney according to a preset algorithm based on the historical grant rate of the attorney and the review result; and
   generating personal introduction information corresponding to the attorney according to a preset template based on the professional level of the attorney.

2. The method of claim 1, wherein the identification information of the attorney comprises a name and surname of the attorney and a practice experience of the attorney, and the practice experience comprises a name of agency corresponding to a practice period of the attorney; and before processing all the patent case data corresponding to the attorney using the established patent case data processing model, the method further comprises:
   extracting all the patent case data corresponding to the attorney from the third-party database according to the name and surname of the attorney and the practice experience of the attorney.

3. The method of claim 1, wherein the method further comprises:

   obtaining historical service evaluation information of the attorney; and
   the determining the professional level of the attorney according to the preset algorithm based on the historical grant rate of the attorney and the review result comprises:
   determining the professional level of the attorney according to the preset algorithm based on the historical grant rate of the attorney, the review result, and the historical service evaluation information.

4. The method of claim 1, wherein the basic information further comprises a profession agent direction; and the extracting the preset number of to-be-evaluated patent cases within the preset period in years from all the patent case data corresponding to the attorney comprises:

   selecting candidate patent case data matching the profession agent direction from all the patent case data corresponding to the attorney; and
   extracting the to-be-evaluated patent cases from the candidate patent case data.

5. The method of claim 1, wherein the processing all the patent case data corresponding to the attorney using the established patent case data processing model, and calculating the historical grant rate of the attorney comprise:

   extracting a legal status from all the patent case data using the established patent case data processing model, wherein the legal status comprises one of: granted, examination in progress, refused, and withdrawn, and the patent case data processing model is for determining a regular expression corresponding to the legal status and extracting a legal status of each case based on the regular expression;
   counting a number of granted cases with the legal status of granted, a number of refused cases with the legal status of refused, and a number of withdrawn cases with the legal status of withdrawn; and

calculating the historical grant rate according to the number of the granted case, the number of the refused cases, and the number of the withdrawn cases.

6. The method of claim 5, wherein the counting the number of the granted cases with the legal status of granted, the number of the refused cases with the legal status of refused, and the number of the withdrawn cases with the legal status of withdrawn comprises:

counting the number of the granted cases, the number of the refused cases, and the number of the withdrawn cases in a preset number of closed cases closest to a current time; and
the calculating the historical grant rate according to the number of the granted case, the number of the refused cases, and the number of the withdrawn cases comprises:
calculating a latest historical grant rate according to the number of the granted cases, the number of the refused cases, and the number of the withdrawn cases in the preset number of closed cases closest to the current time.

7. The method of claim 5, wherein the counting the number of the granted cases with the legal status of granted, the number of the refused cases with the legal status of refused, and the number of the withdrawn cases with the legal status of withdrawn comprises:

selecting candidate patent cases with a filing date within a preset time period; and
counting the number of the granted cases with the granted status, the number of the refused cases with the refused status, and the number of the withdrawn cases with the withdrawn status in the candidate patent cases; and
calculating the historical grant rate according to the number of the granted case, the number of the refused cases, and the number of the withdrawn cases comprises:
calculating the historical grant rate corresponding to the preset time period according to the number of the granted cases with the granted status, the number of the refused cases with the refused status, and the number of the withdrawn cases with the withdrawn status in the candidate patent cases.

8. The method of claim 3, wherein the determining the professional level of the attorney according to the preset algorithm based on the historical grant rate of the attorney, the review result, and the historical service evaluation information comprises:

obtaining practice duration in years of the attorney and a total number of historical case filings of the attorney, and using the practice duration in years and the total number of historical case filings as inputs to a weight determination model, wherein the weight determination model is trained based on a deep neural network model; obtaining a first weight corresponding to the historical grant rate of the attorney, a second weight corresponding to the review result and a third weight corresponding to the historical service evaluation information output by the weight determination model; and
determining the professional level of the attorney according to the historical grant rate and the first weight, the review result and the second weight, and the historical service evaluation information and the third weight.

9. The method of claim 2, wherein the extracting all the patent case data corresponding to the attorney from the third-party database according to the name and surname of the attorney and the practice experience of the attorney comprises:

determining target search conditions according to the name and surname of the attorney and the practice experience of the attorney, wherein the target search conditions comprise the name and surname of the attorney, and a name of practicing agency and a corresponding practice period; and
extracting all the patent case data corresponding to the attorney from the third-party database according to the target search conditions.

10. The method of claim 1, further comprising:

analyzing all the patent case data corresponding to the attorney, and obtaining applicants of historical agent and technical fields of historical agent of the attorney;
wherein the generating the personal introduction information corresponding to the attorney according to the preset template based on the professional level of the attorney comprises:
generating the personal introduction information corresponding to the attorney according to the professional level of the attorney, the applicants of historical agent and the technical fields of historical agent.

11. The method of claim 10, wherein analyzing all the patent case data corresponding to the attorney and obtaining the applicants of historical agent and the technical fields of historical agent of the attorney comprise:

grabbing classification number information and abstract information of each patent case, analyzing the abstract information, and extracting technical keywords; and

using the classification number information and the technical keywords as inputs of a technology field classification model, determining a technology field category corresponding to the patent case, and using the determined technology field category as a technical field label of the patent case.

12. The method of claim 11, wherein the technology field classification model comprises: a first feature model, a second feature model and a classification model, the first feature model is for determining a first feature vector corresponding to a classification number according to the classification number, the second feature model is for determining a second feature vector corresponding to the technical keywords, and the classification model is for determining the technology field category corresponding to the patent case based on the first feature vector and the second feature vector.

13. The method of claim 1, wherein the basic information further comprises a qualification certificate number of the attorney, and after obtaining the basic information of the attorney, further comprises:

obtaining an official practice experience of the attorney according to the qualification certificate number of the attorney;
verifying the basic information of the attorney according to the official practice experience, and performing the step of establishing the connection with the third-party database in response to the verification being successful; and
returning a result of unsuccessful verification in response to the verification being unsuccessful.

14. The method of claim 10, wherein the analyzing all the patent case data corresponding to the attorney and obtaining the applicants of historical agent and the technical fields of historical agent of the attorney comprise:

extracting applicant information in each case, and counting a number of cases corresponding to same applicant information;
determining a main applicant according to the number of cases corresponding to each of the applicant information, wherein the main applicant is an applicant with the largest number of cases;
obtaining a technology classification number and technical keywords of each case, and determining a technical field corresponding to each case according to the technology classification number and the technical keywords; and
counting a number of cases corresponding to a same technical field, and determining a main technical field according to the number of cases corresponding to the same technical field.

15. An apparatus for information processing based on data interaction, wherein the apparatus comprises:

an obtaining module configured for obtaining basic information of an attorney, wherein the basic information comprises identification information of the attorney;
a connecting module configured for establishing a connection with a third-party database, wherein the third-party database stores patent case information, and the patent case information comprises the identification information of the attorney;
a processing module configured for processing all patent case data corresponding to the attorney using a established patent case data processing model, and calculating a historical grant rate of the attorney within a preset time;
an extracting module configured for extracting a preset number of to-be-evaluated patent cases within a preset period in years from all the patent case data corresponding to the attorney;
a reviewing module configured for sending the to-be-evaluated patent cases to a corresponding expert for review, and receiving a returned review result;
a determining module configured for determining a professional level of the attorney according to a preset algorithm based on the historical grant rate of the attorney and the review result; and
a generating module configured for generating personal introduction information corresponding to the attorney according to a preset template based on the professional level of the attorney.

16. A computer readable storage medium storing a computer program, wherein when the computer program is executed by a processor, the processor is caused to perform the steps of the method for information processing based on data interaction according to any one of claims 1 to 14.

17. A computer device, comprising a storage and a processor, wherein the storage stores a computer program, and when the computer program is executed by the processor, the processor is caused to perform the steps of the method for information processing based on data interaction according to any one of claims 1 to 14.

102

Obtaining basic information of an attorney, where the basic information includes identification information of the attorney

104

Establishing a connection with a third-party database, where the third-party database stores patent case information, and the patent case information includes the identification information of the attorney

106

Processing all patent case data corresponding to the attorney using a established patent case data processing model, and calculating a historical grant rate of the attorney within a preset time

108

Extracting a preset number of to-be-evaluated patent cases within a preset period in years from all the patent case data corresponding to the attorney

110

Sending the to-be-evaluated patent cases to a corresponding expert for review, and receiving a returned review result

112

Determining a professional level of the attorney according to a preset algorithm based on the historical grant rate of the attorney and the review result

114

Generating personal introduction information corresponding to the attorney according to a preset template based on the professional level of the attorney

FIG. 1

202

Obtaining practice duration in years of the attorney and a total number of historical case filings of the attorney, and using the practice duration in years and the total number of historical case filings as inputs to a weight determination model, where the weight determination model is trained based on a deep neural network model

204

Obtaining a first weight corresponding to the historical grant rate of the attorney, a second weight corresponding to the review result and a third weight corresponding to the historical service evaluation information output by the weight determination model

206

Determining the professional level of the attorney according to the historical grant rate and the first weight, the review result and the second weight, and the historical service evaluation information and the third weight

FIG. 2

302

Obtaining basic information of a customer, where the basic information of the customer includes applicant information

304

Establishing a connection with a third-party database stored with patent case information

306

Analyzing all the patent case data corresponding to the applicant information using a preset patent analysis model, and obtaining historical application information corresponding to the applicant information

308

Obtaining agent requirement information of the customer

310

Matching the attorney information in the database according to the agent requirement information and the historical application information, and generating a matched attorney list, where the attorney list includes a plurality of the matched attorney information

312

Returning the generated attorney list to a terminal device of the customer

FIG. 3

402

Determining the field requirement, the level requirement, the profession requirement, and the time limit requirement according to the agent requirement information, the historical evaluation information, and the historical application information

404

Performing a similarity calculation according to the field requirement and the field information corresponding to each candidate attorney, and obtaining a field matching degree corresponding to the field requirement.

406

Performing a correlation calculation according to the profession requirement and the profession information corresponding to each candidate attorney, and obtaining a profession matching degree corresponding to the profession requirement

408

Matching according to the level requirement and the level information corresponding to each candidate attorney, and obtaining a level matching degree corresponding to the level requirement

410

Matching according to the time limit requirement and the time information corresponding to each candidate attorney, and obtaining a time limit matching degree corresponding to the time limit requirement

412

Determining the matching degree with respect to each candidate attorney according to the field matching degree, the profession matching degree, the level matching degree, and the time limit matching degree

FIG. 4

502

Establishing an attorney information database including the professional level of the attorney

↓ 504

Establishing a customer information database including the historical application information

↓ 506

Obtaining the agent requirement information of a target customer, matching the attorney information in the attorney information database according to the agent requirement information and the historical application information corresponding to the target customer, and generating a matched attorney list including a plurality of matched attorney information

↓ 508

Returning the generated attorney list to the terminal device of the customer

FIG. 5

| Terminal Device of Attorney | Terminal Device of Expert | Information Processing Platform | Third-party Database |
|---|---|---|---|

Attorney registration (fill in basic information including at least name of the attorney + practice experience)

Data request (carries name of the attorney + practice experience)

Return all patent case data of the attorney

Analyze the patent case data, and obtain a grant rate of the attorney

Extract to-be-evaluated patent cases, and analyze the technical field

Send a review request

Return a review result

Obtain historical evaluation information, and determine a professional level by combining the historical grant rate and the review result

Obtains the applicants and technical fields of historical agent through statistics

Generate personal introduction information of the attorney to store in a attorney information database

| Terminal Device of Customer | Information Processing Platform | Third-party Database |
|---|---|---|

Customer registration (applicant information)

Request case information of the applicant

Return patent case data of the applicant

Analyze to obtain historical application information including: technical fields, cooperation agencies and cooperation attorneys of historical applications to add to a customer information database

Send agent requirement information

Obtain the historical evaluation information, match by combining the agent requirement information and the historical application information, and generate a matched attorney list

Return the list

FIG. 6

702

Obtaining Module

704

Connecting Module

706

Processing Module

708

Extracting Module

710

Reviewing Module

712

Determining Module

714

Generating Module

FIG. 7

FIG. 8

902

First Establishing
Module

904

Second Establishing
Module

906

Obtaining Module

908

Matching Module

910

Returning Module

FIG. 9

FIG. 10

## INTERNATIONAL SEARCH REPORT

| | International application No. |
|---|---|
| | **PCT/CN2022/098946** |

**A.      CLASSIFICATION OF SUBJECT MATTER**

G06F 16/9535(2019.01)i;  G06F 16/906(2019.01)i;  G06F 16/25(2019.01)i;  G06Q 50/18(2012.01)i

According to International Patent Classification (IPC) or to both national classification and IPC

**B.      FIELDS SEARCHED**

Minimum documentation searched (classification system followed by classification symbols)

G06F G06Q

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 交互, 代理人, 身份, 数据库, 专利, 历史, 授权率, 评审, 级别, 模板, interaction, agent, identity, database, patent, history, authorization rate, evaluate, level, template

**C.      DOCUMENTS CONSIDERED TO BE RELEVANT**

| Category* | Citation of document, with indication, where appropriate, of the relevant passages | Relevant to claim No. |
|---|---|---|
| PX | CN 113704600 A (NOZO GROUP CO., LTD.) 26 November 2021 (2021-11-26)<br>     claims 1-17 | 1-17 |
| X | CN 109389258 A (BEIJING HENGGUAN NETWORK DATA PROC CO., LTD.) 26 February 2019 (2019-02-26)<br>     description, paragraphs [0011] and [0064]-[0128] | 1-9, 13, 15-17 |
| Y | CN 109389258 A (BEIJING HENGGUAN NETWORK DATA PROC CO., LTD.) 26 February 2019 (2019-02-26)<br>     description, paragraphs [0011] and [0064]-[0128] | 10-12, 14 |
| Y | CN 106023000 A (CHANGSHA LUZHI INFORMATION TECHNOLOGY CO., LTD.) 12 October 2016 (2016-10-12)<br>     description, paragraphs [0031]-[0050] | 10-12, 14 |
| A | CN 110457357 A (CHINA PING AN PROPERTY INSURANCE CO., LTD.) 15 November 2019 (2019-11-15)<br>     entire document | 1-17 |
| A | CN 109710752 A (JIANGSU YANGGUANG HUIYUAN INTELLECTUAL PROPERTY MAN CO., LTD.) 03 May 2019 (2019-05-03)<br>     entire document | 1-17 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 August 2022** | **14 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/098946** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2011060737 A1 (CARDELLA, J.) 10 March 2011 (2011-03-10) entire document | 1-17 |

Form PCT/ISA/210 (second sheet) (January 2015)

**INTERNATIONAL SEARCH REPORT**
Information on patent family members

International application No.

**PCT/CN2022/098946**

| Patent document cited in search report | | | Publication date (day/month/year) | Patent family member(s) | | | Publication date (day/month/year) |
|---|---|---|---|---|---|---|---|
| CN | 113704600 | A | 26 November 2021 | None | | | |
| CN | 109389258 | A | 26 February 2019 | None | | | |
| CN | 106023000 | A | 12 October 2016 | None | | | |
| CN | 110457357 | A | 15 November 2019 | None | | | |
| CN | 109710752 | A | 03 May 2019 | None | | | |
| US | 2011060737 | A1 | 10 March 2011 | US | 2011078138 | A1 | 31 March 2011 |

Form PCT/ISA/210 (patent family annex) (January 2015)